# EUROPEAN PATENT APPLICATION

(11) **EP 4 852 189 A1**
(43) Date of publication of application: **09.12.2026**
(21) Application number: 24922825.5
(22) Date of filing: 06.02.2024
(51) Int. Cl.: H01M 50/342

(54) **BATTERY CELL, BATTERY, AND ELECTRIC DEVICE**

(71) Applicant: Contemporary Amperex Technology Co., Limited, Ningde, Fujian 352100 (CN)
(72) Inventor: SU, Huasheng, Ningde, Fujian 352100 (CN); ZHENG, Yulian, Ningde, Fujian 352100 (CN); HUANG, Shoujun, Ningde, Fujian 352100 (CN); WANG, Peng, Ningde, Fujian 352100 (CN); JIN, Haizu, Ningde, Fujian 352100 (CN)
(74) Representative: Gong, Jinping
(86) International application number: PCT/CN2024/076459
(87) International publication number: WO 2025/166582

(57) **Abstract**

A battery cell (10), a battery (100), and an electric device are provided. The battery cell (10) includes a housing (1) and an electrode assembly (2). The housing (1) is cylindrical, the housing (1) accommodates the electrode assembly (2), and the housing (1) includes a sidewall (13) disposed around the electrode assembly (2). The sidewall (13) is provided with a first groove (132), and the sidewall (13) is configured to be capable of rupturing along at least a portion of the first groove (132) during pressure relief of the battery cell (10). The first groove (132) includes an initiation segment (1322a) that preferentially ruptures. The first groove (132) includes a first groove segment (1321), a second groove segment (1322), and a third groove segment (1323). The second groove segment (1322) connects the first groove segment (1321) and the third groove segment (1323), and at least a portion of the second groove segment (1322) forms the initiation segment (1322a). During thermal runaway of the battery cell (10), the sidewall (13), after rupturing at a position of the initiation segment (1322a), can quickly rupture along the first groove segment (1321) and the third groove segment (1323), shortening the time required for the sidewall (13) to rupture along the first groove (132), enabling timely pressure relief, and reducing the risk of fire or explosion during thermal runaway of the battery cell (10), thereby effectively improving the reliability of the battery cell (10).

## Description

### TECHNICAL FIELD

This application relates to the field of battery technology, in particular to a battery cell, a battery, and an electric device.

### BACKGROUND

In recent years, new energy vehicles have experienced rapid development. In the field of electric vehicles, traction batteries, as the power source of electric vehicles, play an irreplaceable significant role. With the widespread promotion of new energy vehicles, the demand for traction battery products is also increasing. As the demand for batteries continues to grow, higher requirements are imposed on the reliability of battery cells. Therefore, how to improve the reliability of battery cells is an urgent issue to be addressed in battery technology.

### SUMMARY

Embodiments of this application provide a battery cell, a battery, and an electric device capable of effectively improving the reliability of the battery cell.

In a first aspect, an embodiment of this application provides a battery cell, including a housing and an electrode assembly. The housing is cylindrical, the housing accommodates the electrode assembly, and the housing includes a sidewall disposed around the electrode assembly. The sidewall is provided with a first groove, and the sidewall is configured to be capable of rupturing along at least a portion of the first groove during pressure relief of the battery cell; where the first groove includes an initiation segment that preferentially ruptures. The first groove includes a first groove segment, a second groove segment, and a third groove segment. The second groove segment connects the first groove segment and the third groove segment, and at least a portion of the second groove segment forms the initiation segment.

In the above technical solution, the sidewall of the housing is provided with a first groove, enabling the sidewall to rupture along at least a portion of the first groove during pressure relief of the battery cell, thereby releasing the internal pressure of the battery cell. The first groove includes a first groove segment, a second groove segment, and a third groove segment, where the second groove segment connects the first groove segment and the third groove segment, and at least a portion of the second groove segment forms the initiation segment of the first groove. During thermal runaway of the battery cell, the sidewall preferentially ruptures at a position of the initiation segment of the second groove segment, and the resulting crack can expand along the first groove segment and the third groove segment, so that the sidewall can quickly rupture along the first groove segment and the third groove segment after rupturing at the position of the initiation segment, shortening the time required for the sidewall to rupture along the first groove, enabling timely pressure relief, and reducing the risk of fire or explosion during thermal runaway of the battery cell, thereby effectively improving the reliability of the battery cell.

In some embodiments, the first groove segment, the second groove segment, and the third groove segment are sequentially connected to form a continuously disposed first groove, and on an extension path of the first groove, a midpoint of the first groove is located in the initiation segment, so that the initiation segment is located in a middle region of the first groove, reducing a path difference for the sidewall to continue rupturing toward two ends of the first groove after the sidewall ruptures at the position of the initiation segment, facilitating synchronous rupturing of the sidewall along the first groove segment and the third groove segment, further shortening the time required for the sidewall to rupture along the first groove, and improving the timeliness of pressure relief of the battery cell.

In some embodiments, on an extension path of the second groove segment, a midpoint of the second groove segment is located in the initiation segment, reducing a path difference for the sidewall to continue rupturing toward two ends of the second groove segment after the sidewall ruptures at the position of the initiation segment, so that the sidewall can quickly rupture along the second groove segment during thermal runaway of the battery cell, and thus the sidewall can quickly rupture along the first groove segment and the third groove segment, thereby effectively shortening the time required for the sidewall to rupture along the first groove.

In some embodiments, the first groove is a groove extending along a non-closed trajectory. The first groove with such structure provides the sidewall with better fatigue resistance, reducing the risk of the sidewall prematurely rupturing along the first groove during long-term cyclic use of the battery cell. Additionally, after the sidewall ruptures along the first groove, an opened portion of the sidewall is less likely to cause splashing.

In some embodiments, a minimum residual thickness of the initiation segment is less than a minimum residual thickness of other regions of the first groove. This allows the strength of a residual portion of the initiation segment to be less than the strength of a residual portion of other regions of the first groove, enabling the sidewall to preferentially rupture at the initiation segment during thermal runaway of the battery cell, thereby achieving precise control of a rupture initiation position and improving the accuracy of the rupture initiation position.

In some embodiments, the first groove segment, the second groove segment, and the third groove segment are sequentially connected to form a continuously disposed first groove, where the first groove segment is disposed opposite the third groove segment. Thus, the first groove is a U-shaped groove, with a simple structure. Additionally, the first groove segment, the second groove segment, and the third groove segment can define a predetermined pressure relief zone, and the predetermined pressure relief zone can be quickly opened outward in a flipping manner during pressure relief of the battery cell, increasing a pressure relief area of the battery cell and effectively increasing the pressure relief rate of the battery cell.

In some embodiments, the first groove segment and the third groove segment are both smoothly connected to the second groove segment. On one hand, the sidewall can smoothly rupture along the first groove segment and the third groove segment after rupturing along the second groove segment, shortening the time required for the sidewall to rupture along the first groove, and enabling the predetermined pressure relief zone to flip toward the outside of the housing more smoothly; on the other hand, stress concentration coefficients at a connection position between the first groove segment and the second groove segment and a connection position between the third groove segment and the second groove segment can be effectively reduced, enhancing the fatigue strength of the sidewall and effectively extending the service life of the battery cell.

In some embodiments, the second groove segment includes a first connecting segment, a second connecting segment, and the initiation segment. The first connecting segment connects the initiation segment and the first groove segment, and the second connecting segment connects the initiation segment and the third groove segment; where a minimum residual thickness of the first connecting segment, a minimum residual thickness of the second connecting segment, a minimum residual thickness of the first groove segment, and a minimum residual thickness of the third groove segment are all greater than a minimum residual thickness of the initiation segment. Thus, the initiation segment is a middle segment of the second groove segment, allowing the sidewall to quickly rupture along the first connecting segment and the second connecting segment located at two ends of the initiation segment after rupturing at the position of the initiation segment, shortening the time required for the sidewall to rupture along the second groove segment, thereby enabling the sidewall to quickly rupture along the first groove segment and the third groove segment.

In some embodiments, the minimum residual thickness of the first connecting segment is equal to the minimum residual thickness of the first groove segment; and/or the minimum residual thickness of the second connecting segment is equal to the minimum residual thickness of the third groove segment; and/or the minimum residual thickness of the first connecting segment is equal to the minimum residual thickness of the second connecting segment; and/or the minimum residual thickness of the first groove segment is equal to the minimum residual thickness of the third groove segment. This can effectively reduce the forming difficulty of the first groove.

In some embodiments, the minimum residual thickness of the initiation segment is T₁, a wall thickness of the sidewall is D, and 0.04≤T₁/D≤0.9. When T₁/D≥0.04, a proportion of the minimum residual thickness of the initiation segment in the wall thickness of the sidewall is not too small, providing sufficient strength to the residual portion of the initiation segment, thereby reducing the risk of the sidewall prematurely rupturing along the initiation segment during long-term cyclic use of the battery cell, and extending the service life of the battery cell; and when T₁/D≤0.9, the proportion of the minimum residual thickness of the initiation segment in the wall thickness of the sidewall is not too large, enabling the sidewall to rupture more timely at the initiation segment during thermal runaway of the battery cell, thereby shortening the time required for the sidewall to rupture along the first groove, and reducing the risk of fire or explosion in the battery cell.

In some embodiments, 0.1≤T₁/D≤0.5. When T₁/D≥0.1, the proportion of the minimum residual thickness of the initiation segment in the wall thickness of the sidewall is further increased, further reducing the risk of the sidewall prematurely rupturing along the initiation segment during long-term cyclic use of the battery cell; and when T₁/D≤0.5, the proportion of the minimum residual thickness of the initiation segment in the wall thickness of the sidewall is further reduced, further reducing the risk of fire or explosion in the battery cell.

In some embodiments, on an extension path of the second groove segment, a groove length of the initiation segment is L, and 0.2 mm≤L≤10 mm. When L≥0.2 mm, the groove length of the initiation segment is not too small, reducing the processing difficulty of the initiation segment; and when L≤10 mm, the groove length of the initiation segment is not too large, enabling precise control of the rupture initiation position of the sidewall and improving the accuracy of the rupture initiation position.

In some embodiments, 1 mm≤L≤6 mm. when L≥1 mm, the groove length of the initiation segment is further increased, further reducing the processing difficulty of the initiation segment; and when L≤6 mm, the groove length of the initiation segment is further reduced, further improving the accuracy of the rupture initiation position of the sidewall.

In some embodiments, an extension trajectory line of the first groove segment is located in a first plane, and an included angle between a centerline of the sidewall and the first plane is α₁, where 30°≤α₁≤90°. Controlling the included angle between the centerline of the sidewall and the first plane to be within an appropriate range can reduce the risk of tearing of the sidewall caused when the sidewall continues to rupture along an extension line of the first groove segment after the sidewall ruptures along the first groove segment.

In some embodiments, an extension trajectory line of the third groove segment is located in a second plane, and an included angle between the centerline of the sidewall and the second plane is α₂, where 30°≤α₂≤90°. Controlling the included angle between the centerline of the sidewall and the second plane to be within an appropriate range can reduce the risk of tearing of the sidewall caused when the sidewall continues to rupture along an extension line of the third groove segment after the sidewall ruptures along the third groove segment.

In some embodiments, the first groove is provided on an outer surface of the sidewall. Thus, the first groove can be processed on the exterior of the sidewall, reducing the processing difficulty of the first groove.

In some embodiments, the sidewall is provided with at least one groove group, and the groove group includes multiple first grooves spaced apart along the circumferential direction of the sidewall. Such structure enables the housing to relieve pressure from multiple positions along a circumferential direction of the sidewall, further increasing the pressure relief rate of the battery cell.

In some embodiments, the sidewall is provided with at least one groove group, and the groove group includes at least one first groove and at least one second groove spaced apart along the circumferential direction of the sidewall, where a minimum residual thickness of the second groove is greater than the minimum residual thickness of the initiation segment. The first groove is a true pressure relief groove, and the second groove is a false pressure relief groove. During pressure relief, the sidewall can rupture along the first groove but is less likely to rupture along the second groove. The provision of the second groove can increase the roundness of the sidewall and increasing an assembly quality of the battery cell, thereby extending the service life of the battery cell.

In some embodiments, the minimum residual thickness of the initiation segment is T₁, a minimum residual thickness of other regions of the first groove is T₂, and the minimum residual thickness of the second groove is T₃, where T₁<T₂ and T₁<T₃. This ensures that the strength of the residual portion of other regions of the first groove and the strength of the residual portion of the second groove are both greater than the strength of the residual portion of the initiation segment, enabling the sidewall to preferentially rupture at the initiation segment during thermal runaway of the battery cell, thereby enabling the sidewall to rupture along the first groove but making it difficult for the sidewall to rupture along the second groove.

In some embodiments, |T₃-T₂|≤0.1 mm. This ensures that a difference between a groove depth of the second groove and a groove depth of other regions of the first groove is not too large, helping to reduce a difference in material displacement of the first groove and the second groove during the processing of the first groove and the second groove, minimizing the deformation of the sidewall, and helping to increase the roundness of the sidewall.

In some embodiments, the groove width of the first groove is W₁, the groove width of the second groove is W₂, and |W₂-W₁|≤0.1 mm. This ensures that the difference between the groove width of the second groove and the groove width of the first groove is not too large, helping to reduce the difference in material displacement of the first groove and the second groove during the processing of the first groove and the second groove, minimizing the deformation of the sidewall, and helping to increase the roundness of the sidewall.

In some embodiments, the groove group includes multiple first grooves and multiple second grooves, and along the circumferential direction of the sidewall, the first grooves and the second grooves in the groove group are alternately arranged. Such structure can further increase the roundness of the sidewall.

In some embodiments, the sidewall is provided with multiple groove groups, and the multiple groove groups are spaced apart along an axial direction of the sidewall. Such structure allows emissions inside the housing to be discharged from regions of the first grooves in the multiple groove groups during thermal runaway of the battery cell, further increasing the pressure relief rate of the battery cell.

In some embodiments, along the axial direction of the sidewall, two opposite ends of the sidewall are each provided with an opening. The housing further includes two end covers, and the two end covers respectively seal the openings at the two ends of the sidewall. Thus, the sidewall is a hollow structure with openings formed at both two opposite ends, allowing the electrode assembly to be assembled into the sidewall through either opening, thereby reducing the assembly difficulty of the battery cell and improving the assembly quality of the battery cell. The sidewall with such structure has lower forming difficulty, allowing a length of the sidewall (a dimension of the sidewall in an axial direction) to be made larger, thereby helping to increase the capacity of the battery cell.

In some embodiments, the housing includes a shell and an end cover. The shell includes the sidewall and a bottom wall, and along the axial direction of the sidewall, one end of the sidewall is connected to the bottom wall, and the other end of the sidewall is provided with an opening. The end cover seals the opening. The shell is a hollow structure with an opening formed at one end, which can simplify the structure of the battery cell.

In a second aspect, an embodiment of this application provides a battery, including the battery cell provided in any embodiment of the first aspect.

In a third aspect, an embodiment of this application provides an electric device, including the battery cell provided in any embodiment of the first aspect, where the battery cell is configured to provide electrical energy to the electric device.

### BRIEF DESCRIPTION OF DRAWINGS

To more clearly illustrate the technical solutions of the embodiments of this application, the drawings required for use in the embodiments are briefly introduced below. It should be understood that the following drawings only illustrate some embodiments of this application and therefore should not be considered as limiting the scope. For those of ordinary skill in the art, other related drawings can be obtained based on these drawings without creative effort.
FIG. 1 is a schematic structural diagram of a vehicle according to some embodiments of this application;
FIG. 2 is an exploded view of a battery according to some embodiments of this application;
FIG. 3 is an assembly diagram of a battery cell according to some embodiments of this application;
FIG. 4 is an exploded view of the battery cell shown in FIG. 3;
FIG. 5 is a schematic structural diagram of a housing shown in FIG. 4;
FIG. 6 is a partial view of the housing shown in FIG. 5;
FIG. 7 is a cross-sectional view along A-A of the housing shown in FIG. 6;
FIG. 8 is a partial enlarged view at C in FIG. 7;
FIG. 9 is a cross-sectional view along B-B of the housing shown in FIG. 6;
FIG. 10 is a partial enlarged view at E in FIG. 9;
FIG. 11 is an assembly diagram of a battery cell according to some other embodiments of this application;
FIG. 12 is an exploded view of the battery cell shown in FIG. 11;
FIG. 13 is a schematic structural diagram of the housing shown in FIG. 12;
FIG. 14 is a partial view of the housing shown in FIG. 13;
FIG. 15 is a cross-sectional view along F-F of the housing shown in FIG. 14;
FIG. 16 is a partial enlarged view at I in FIG. 15;
FIG. 17 is a partial enlarged view at J in FIG. 15;
FIG. 18 is a cross-sectional view along G-G of the housing shown in FIG. 14;
FIG. 19 is a partial enlarged view at K in FIG. 18; and
FIG. 20 is an exploded view of a battery cell according to some embodiments of this application.

Reference signs: 1. housing; 11. shell; 12. end cover; 13. sidewall; 131. groove group; 132. first groove; 1321. first groove segment; 1322. second groove segment; 1322a. initiation segment; 1322b. first connecting segment; 1322c. second connecting segment; 1323. third groove segment; 133. second groove; 134. predetermined pressure relief zone; 14. bottom wall; 2. electrode assembly; 21. tab; 3. electrode terminal; 4. current collector; 10. battery cell; 20. box; 201. first part; 202. second part; 100. battery; 200. controller; 300. motor; 1000. vehicle; O. centerline; U. first plane; V. second plane; X. axial direction; and Y. circumferential direction.

### DESCRIPTION OF EMBODIMENTS

To make the objectives, technical solutions, and advantages of the embodiments of this application clearer, the technical solutions in the embodiments of this application are clearly described below in conjunction with the drawings in the embodiments of this application. Obviously, the described embodiments are only some rather than all of the embodiments of this application. Based on the embodiments in this application, all other embodiments obtained by those of ordinary skill in the art without creative effort fall within the scope of protection of this application.

Unless otherwise defined, all technical and scientific terms used in this application have the same meaning as commonly understood by those skilled in the technical field of this application; the terms used in the specification of this application are for the purpose of describing specific embodiments only and are not intended to limit this application; the terms "include", "comprise", "have", and any variations thereof in the specification, claims, and the above description of the drawings of this application are intended to cover non-exclusive inclusion. The terms "first", "second", and the like in the specification, claims, or the above description of the drawings of this application are used to distinguish different objects rather than to describe a specific order or a primary-secondary relationship.

Reference to "embodiment" in this application means that a specific feature, structure, or characteristic described in connection with the embodiment may be included in at least one embodiment of this application. The appearance of the phrase in various places in the specification does not necessarily refer to the same embodiment, nor is it an independent or alternative embodiment mutually exclusive with other embodiments.

In the description of this application, it should be noted that, unless otherwise explicitly specified and limited, the terms "mounting", "connection", "join", and "attachment" should be understood broadly, for example, they may be fixed connection, detachable connection, or integral connection; and they may be direct connection, indirect connection through an intermediate medium, or internal communication between two components. For those of ordinary skill in the art, the specific meanings of the above terms in this application can be understood based on specific circumstances.

The term "and/or" in this application is merely an association relationship describing associated objects, indicating that three relationships may exist. For example, A and/or B may indicate: only A exists, both A and B exist, and only B exists. Additionally, the character "/" in this application generally indicates an "or" relationship between the contextually associated objects.

In the embodiments of this application, the same reference numerals denote the same components, and for brevity, detailed descriptions of the same components are omitted in different embodiments. It should be understood that the dimensions such as thickness, length, and width of various components in the embodiments of this application shown in the drawings, as well as the overall thickness, length, and width of the integrated apparatus, are merely illustrative and should not constitute any limitation to this application.

The term "multiple" in this application means more than two (including two).

In the embodiments of this application, the battery cell may be a secondary battery. The secondary battery refers to a battery cell that can be recharged to activate the active material and continue to be used after discharge.

Battery cells include, but are not limited to, lithium-ion batteries, sodium-ion batteries, sodium-lithium-ion batteries, lithium metal batteries, sodium metal batteries, lithium-sulfur batteries, magnesium-ion batteries, nickel-hydrogen batteries, nickel-cadmium batteries, and lead-acid batteries.

A battery cell generally includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode, reducing the risk of short-circuiting between the positive and negative electrodes while allowing active ions to pass through.

In some embodiments, the positive electrode may be a positive electrode plate, where the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either or both of the two opposite surfaces of the positive electrode current collector.

In an example, the positive electrode current collector may be a metal foil or a composite current collector. For example, the metal foil may be made of aluminum with a silver-plated surface, stainless steel with a silver-plated surface, stainless steel, copper, aluminum, nickel, carbon electrode, carbon, nickel, titanium, or the like. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (for example, substrates such as polypropylene, polyethylene terephthalate, polybutylene terephthalate, polystyrene, and polyethylene).

In an example, the positive electrode active material may include at least one of the following materials: lithium-containing phosphates, lithium transition metal oxides, and respective modified compounds therefore. However, this application is not limited to these materials, and other conventional materials that can be used as positive electrode active materials for batteries may also be used. These positive electrode active materials may be used alone, or two or more of them may be used in combination. Examples of lithium-containing phosphates may include, but are not limited to, at least one of lithium iron phosphate (for example, LiFePO₄ (also abbreviated as LFP)), a composite material of lithium iron phosphate and carbon, lithium manganese phosphate (for example LiMnPO₄), a composite material of lithium manganese phosphate and carbon, lithium manganese iron phosphate, and a composite material of lithium manganese iron phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (for example, LiNi_{0.85}Co_{0.15}Al_{0.05}O₂), and modified compounds therefore.

In some embodiments, the positive electrode may be made of a foam metal. The foam metal may be foam nickel, foam copper, foam aluminum, foam alloy, or the like. When a foam metal is used as the positive electrode, a surface of the foam metal may be provided with no positive electrode active material or may be provided with a positive electrode active material. In an example, a lithium source material, potassium metal, or sodium metal may fill and/or deposit in the foam metal, where the lithium source material is a lithium metal and/or lithium-rich material.

In some embodiments, the negative electrode may be a negative electrode plate, where the negative electrode plate may include a negative electrode current collector.

In an example, the negative electrode current collector may be a metal foil, foam metal, or composite current collector. For example, the metal foil may be made of aluminum or stainless steel with a silver-plated surface, stainless steel, copper, aluminum, nickel, carbon electrode, carbon, nickel, or titanium. The foam metal may be foam nickel, foam copper, foam aluminum, foam alloy, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (for example, substrates such as polypropylene, polyethylene terephthalate, polybutylene terephthalate, polystyrene, and polyethylene).

In an example, the negative electrode plate may include a negative electrode current collector and a negative electrode active material disposed on at least one surface of the negative electrode current collector.

In an example, the negative electrode current collector has two opposite surfaces in its thickness direction, and the negative electrode active material is disposed on either or both of the two opposite surfaces of the negative electrode current collector.

In an example, the negative electrode active material may be a negative electrode active material for battery cells that is well known in the art. In an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, a silicon-oxygen compound, a silicon-carbon composite, a silicon-nitrogen composite, and silicon alloy. The tin-based material may be selected from at least one of elemental tin, a tin-oxygen compound, and tin alloy. However, this application is not limited to these materials, and other conventional materials that can be used as negative electrode active materials for batteries may also be used. These negative electrode active materials may be used alone, or two or more of them are used in combination.

In some embodiments, the positive electrode current collector may be made of aluminum, and the negative electrode current collector may be made of copper.

In some embodiments, the separator is a separating film. The separating film may be any well-known porous separating film with good chemical stability and mechanical stability.

In an example, the material of the separating film may include at least one of glass fiber, non-woven fabric, polyethylene, polypropylene, and polyvinylidene fluoride. The separating film may be a single-layer film or a multilayer composite film. When the separating film is a multilayer composite film, the materials of the layers may be the same or different. The separator may be a single component disposed between the positive and negative electrodes or may be attached to surfaces of the positive and negative electrodes.

In some embodiments, the separator is a solid electrolyte. The solid electrolyte is disposed between the positive electrode and the negative electrode, serving both to transport ions and to isolate the positive and negative electrodes.

In some embodiments, the battery cell further includes an electrolyte. The electrolyte serves to transport ions between the positive and negative electrodes. The electrolyte may be liquid, gel, or solid. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may also be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel electrolyte includes a skeleton network using a polymer as an electrolyte, combined with an ionic liquid-lithium salt.

The solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid electrolyte may include one or more of an oxide solid electrolyte (crystalline perovskite, sodium superionic conductor, garnet, or amorphous LiPON film), a sulfide solid electrolyte (crystalline lithium superionic conductor (lithium germanium phosphorus sulfide or argyrodite), or amorphous sulfide), a halide solid electrolyte, a nitride solid electrolyte, and a hydride solid electrolyte.

In an example, the composite solid electrolyte is formed by adding inorganic solid electrolyte fillers to a polymer solid electrolyte.

In some embodiments, the electrode assembly is a wound structure. The positive electrode plate and the negative electrode plate are wound into a wound structure.

In some embodiments, the electrode assembly is a stacked structure.

In an example, multiple positive electrode plates and multiple negative electrode plates may be respectively provided, and the multiple positive electrode plates and the multiple negative electrode plates are alternately stacked.

In an example, multiple positive electrode plates may be provided, and the negative electrode plate is folded to form multiple stacked folded segments, with one positive electrode plate sandwiched between adjacent folded segments.

In an example, the positive electrode plate and the negative electrode plate are each folded to form multiple stacked folded segments.

In an example, multiple separators may be provided, which are each disposed between any adjacent positive electrode plates or negative electrode plates.

In an example, the separator may be continuously disposed, and arranged between any adjacent positive electrode plates or negative electrode plates by folding or winding.

In some embodiments, the electrode assembly may be in a cylindrical shape, a flat shape, a polygonal prism shape, or the like.

In some embodiments, the electrode assembly is provided with tabs, where the tabs can lead out current from the electrode assembly. The tabs include a positive tab and a negative tab.

In some embodiments, the battery cell may include a housing. The housing is configured to encapsulate components such as the electrode assembly and the electrolyte. The housing may be a steel shell, an aluminum shell, a plastic shell (for example, polypropylene), a composite metal shell (for example, copper-aluminum composite shell), an aluminum-plastic film, or the like.

In an example, the battery cell may be a cylindrical battery cell, a prismatic battery cell, a pouch battery cell, or a battery cell of another shape. Prismatic battery cells include square-shell battery cells, blade-shaped battery cells, and polygonal prism batteries, where the polygonal prism batteries may be hexagonal prism batteries or the like.

The battery mentioned in the embodiments of this application refers to a single physical module including one or more battery cells to provide higher voltage and capacity.

In some embodiments, the battery may be a battery module. When multiple battery cells are provided, the multiple battery cells are arranged and fixed to form a battery module.

In some embodiments, the battery may be a battery pack, where the battery pack includes a box and a battery cell, and the battery cell or battery module is accommodated in the box.

In some embodiments, the box may be a part of a chassis structure of a vehicle. For example, a part of the box may serve as at least a portion of a floor of the vehicle, or a part of the box may serve as at least a portion of crossbeams and longitudinal beams of the vehicle.

In some embodiments, the battery may be an energy storage apparatus. Energy storage apparatuses may include energy storage containers, energy storage cabinets, and the like.

Multiple design factors may all be considered for the development of battery technology, for example, performance parameter such as energy density, cycle life, discharge capacity, and charge-discharge rate. Additionally, the reliability of the battery also needs to be considered.

To improve the reliability of the battery cell, a pressure relief structure may generally be provided in the battery cell, and the pressure relief structure can release an internal pressure of the battery cell during thermal runaway of the battery cell.

For a typical cylindrical battery cell, the pressure relief structure is provided on an end cover, for example, a pressure relief groove is provided on the end cover, so that the end cover ruptures at the pressure relief groove to relieve pressure. In actual use, the pressure relief groove on the end cover is easily blocked by other components, leading to untimely pressure relief.

To reduce the risk of the pressure relief groove being blocked by other components, the pressure relief groove may be provided on a sidewall of the housing of the battery cell. Since the battery cell is cylindrical, even if multiple battery cells are arranged in multiple rows and columns, the pressure relief groove on the sidewall is less likely to be blocked by other battery cells, allowing for normal pressure relief during thermal runaway of the battery cell. However, after the pressure relief groove is provided on the sidewall, a rupture initiation position of the pressure relief groove is random. Therefore, during thermal runaway of the battery cell, the sidewall may rupture along the pressure relief groove from one end to the other end, so that a longer time is required for the sidewall to rupture along the pressure relief groove, which easily leads to untimely pressure relief, causing fire or explosion, thereby causing poor reliability of the battery cell.

To address the issue of poor reliability of the battery cell, an embodiment of this application provides a cylindrical battery cell. A first groove (pressure relief groove) is provided on a sidewall of a housing, where the first groove includes a first groove segment, a second groove segment, and a third groove segment, the second groove segment connects the first groove segment and the third groove segment, and at least a portion of the second groove segment forms an initiation segment of the first groove that preferentially ruptures. In this way, during thermal runaway of the battery cell, the sidewall preferentially ruptures at a position of the initiation segment of the second groove segment, and the resulting crack can expand along the first groove segment and the third groove segment, so that the sidewall can quickly rupture along the first groove segment and the third groove segment after rupturing at the position of the initiation segment, shortening the time required for the sidewall to rupture along the first groove, enabling timely pressure relief, and reducing the risk of fire or explosion during thermal runaway of the battery cell, thereby effectively improving the reliability of the battery cell.

The technical solution described in this embodiment of this application is applicable to batteries and electric devices using batteries.

The electric device may be a vehicle, a mobile phone, a portable device, a laptop, a ship, a spacecraft, an electric toy, an electric tool, or the like. The vehicle may be a fuel vehicle, a gas vehicle, or a new energy vehicle, and the new energy vehicle may be a battery electric vehicle, a hybrid vehicle, an extended-range vehicle, or the like. Spacecrafts include airplanes, rockets, space shuttles, spaceships, and the like. Electric toys include fixed or mobile electric toys, such as game consoles, electric toy cars, electric toy ships, and electric toy airplanes. Electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers.

For ease of explanation, the electric device being a vehicle is used as an example in the following embodiments.

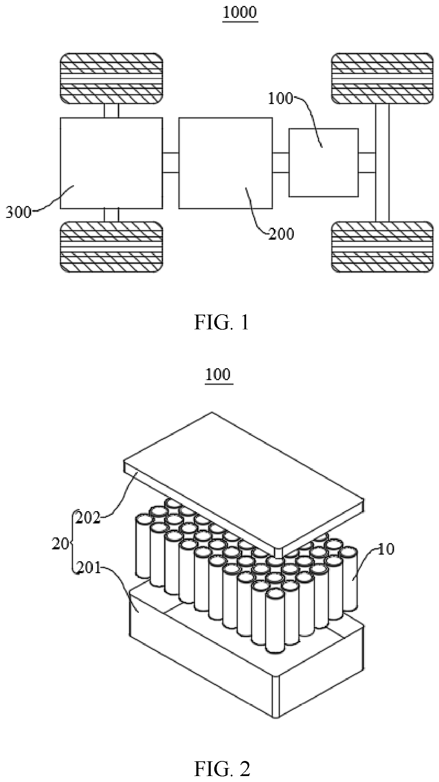

Referring to FIG. 1, FIG. 1 is a schematic structural diagram of a vehicle 1000 according to some embodiments of this application. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may serve as an operating power source of the vehicle 1000.

The vehicle 1000 may further include a controller 200 and a motor 300, where the controller 200 is configured to control the battery 100 to supply power to the motor 300, for example, for the operating power requirements during the startup, navigation, and driving of the vehicle 1000.

In some embodiments of this application, the battery 100 may not only serve as an operating power source of the vehicle 1000 but also serve as a driving power source of the vehicle 1000, replacing or partially replacing fuel or natural gas to provide driving power for the vehicle 1000.

Referring to FIG. 2, FIG. 2 is an exploded view of a battery 100 according to some embodiments of this application. The battery 100 includes a battery cell 10 and a box 20, where the battery cell 10 is accommodated in the box 20.

The box 20 is a component that accommodates the battery cell 10, and the box 20 provides an accommodating space for the battery cell 10. The box 20 may adopt various structures. In some embodiments, the box 20 may include a first part 201 and a second part 202, where the first part 201 and the second part 202 cover each other to define the accommodating space for accommodating the battery cell 10. The first part 201 and the second part 202 may have various shapes, such as a cuboidal shape or a cylindrical shape. The first part 201 may be a hollow structure with one side open, and the second part 202 may also be a hollow structure with one side open, where the open side of the second part 202 covers the open side of the first part 201 to form a box 20 with an accommodating space. Alternatively, the first part 201 may be a hollow structure with one side open, and the second part 202 may be a plate-like structure, where the second part 202 covers the open side of the first part 201 to form a box 20 with an accommodating space. The first part 201 and the second part 202 may be sealed by a sealing element, and the sealing element may be a sealing ring, a sealant, or the like.

In the battery 100, one or more battery cells 10 may be provided. If there are multiple battery cells 10, the multiple battery cells 10 may be connected in series, parallel, or series-parallel, where being connected in series-parallel refers to a combination of series connection and parallel connection between the multiple battery cells 10. Multiple battery cells 10 may first be connected in series, parallel, or series-parallel to form a battery module, and multiple battery modules are then connected in series, parallel, or series-parallel to form an entirety that is accommodated in the box 20. Alternatively, all battery cells 10 may be directly connected in series, parallel, or series-parallel, and then an entirety formed by all the battery cells 10 is accommodated in the box 20.

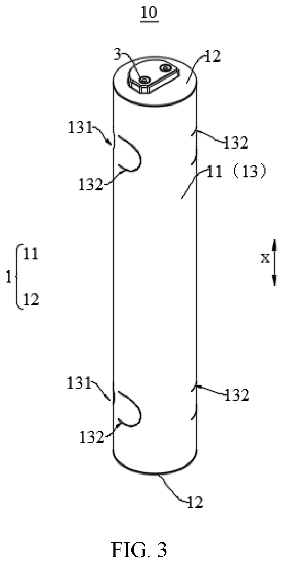

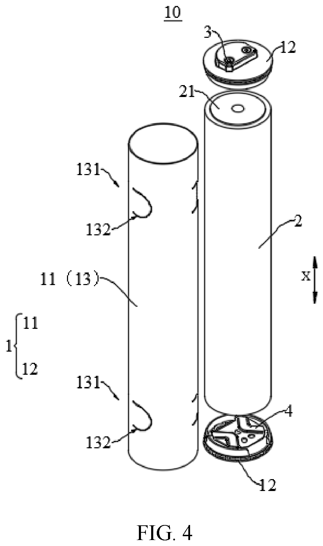

Referring to FIG. 3 and FIG. 4, FIG. 3 is an assembly diagram of a battery cell 10 according to some embodiments of this application, and FIG. 4 is an exploded view of the battery cell 10 shown in FIG. 3. The battery cell 10 may include a housing 1 and an electrode assembly 2, where the electrode assembly 2 is accommodated in the housing 1.

In some embodiments, the housing 1 may include a shell 11 and an end cover 12, where the shell 11 has an opening, and the end cover 12 seals the opening of the shell 11.

The shell 11 is a component configured to accommodate the electrode assembly 2, and the shell 11 may be a hollow structure with an opening formed at one end or a hollow structure with openings formed at both two opposite ends. The shell 11 may have various shapes, such as a cylindrical shape or a cuboid shape. The shell 11 may be made of various materials, such as copper, iron, aluminum, steel, aluminum alloy, or the like.

The end cover 12 is a component that seals the opening of the shell 11 to isolate the internal environment of the battery cell 10 from the external environment. The end cover 12 and the shell 11 jointly define an accommodating space for accommodating the electrode assembly 2, an electrolyte, and other components. The end cover 12 may be connected to the shell 11 by welding or crimping to seal the opening of the shell 11. The shape of the end cover 12 may be adapted to the shape of the housing 1. For example, if the shell 11 is a cuboid structure, the end cover 12 is a rectangular plate-like structure adapted to the housing 1; if the shell 11 is cylindrical, the end cover 12 is a circular plate-like structure adapted to the shell 11. The end cover 12 may also be made of various materials, such as copper, iron, aluminum, steel, aluminum alloy, plastic, or the like, and the material of the end cover 12 may be the same as or different from that of the shell 11.

In embodiments where the shell 11 is a provided with an opening at one end, one end cover 12 may be provided correspondingly. In embodiments where the shell 11 is provided with openings at both two opposite ends, two end covers 12 may be provided correspondingly, where the two end covers 12 respectively seal the two openings of the shell 11, and the two end covers 12 and the shell 11 jointly define an accommodating space.

In some embodiments, the battery cell 10 may further include an electrode terminal 3, where the electrode terminal 3 is disposed on the housing 1 and the electrode terminal 3 is configured to be electrically connected to a tab 21 of the electrode assembly 2 to input or output electrical energy of the battery cell 10. The electrode terminal 3 may be disposed on the shell 11 of the housing 1 or on the end cover 12 of the housing 1. The electrode terminal 3 and the tab 21 may be directly connected, for example, the electrode terminal 3 and the tab 21 are welded. The electrode terminal 3 and the tab 21 may alternatively be indirectly connected, for example, the electrode terminal 3 and the tab 21 are indirectly connected through a current collector 4. The current collector 4 may be a metal conductor, such as copper, iron, aluminum, steel, or aluminum alloy.

In an example, in the embodiments shown in FIG. 3 and FIG. 4, the shell 11 has openings formed at both two opposite ends, and the housing 1 includes two end covers 12, where the two end covers 12 respectively seal the two openings of the shell 11. The two end covers 12 are each provided with an electrode terminal 3, and the two opposite ends of the electrode assembly 2 are each provided with a tab 21, where the tab 21 at one end of the electrode assembly 2 is a positive tab and the tab 21 at the other end is a negative tab. The electrode terminal 3 on one end cover 12 is connected to the positive tab through one current collector 4, and the electrode terminal 3 on the other end cover 12 is connected to the negative tab through another current collector 4.

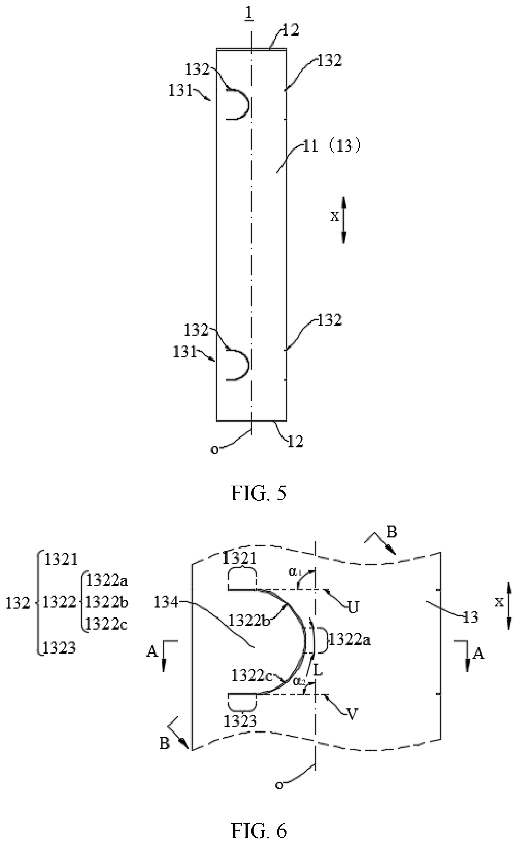

Referring to FIG. 4 to FIG. 6, FIG. 5 is a schematic structural diagram of the housing 1 shown in FIG. 4, and FIG. 6 is a partial view of the housing 1 shown in FIG. 5. These embodiments of this application provide a battery cell 10, including a housing 1 and an electrode assembly 2, where the housing 1 is cylindrical, and the electrode assembly 2 is accommodated in the housing 1. The housing 1 includes a sidewall 13 disposed around the electrode assembly 2, the sidewall 13 is provided with a first groove 132, and the sidewall 13 is configured to be capable of rupturing along at least a portion of the first groove 132 during pressure relief of the battery cell 10. The first groove 132 includes an initiation segment 1322a that preferentially ruptures. The first groove 132 includes a first groove segment 1321, a second groove segment 1322, and a third groove segment 1323. The second groove segment 1322 connects the first groove segment 1321 and the third groove segment 1323, and at least a portion of the second groove segment 1322 forms the initiation segment 1322a.

The housing 1 is cylindrical, so that the battery cell 10 is a cylindrical battery cell. It should be understood that an overall structure formed by the housing 1 and the end cover 12 is cylindrical. It should be noted that, in these embodiments of this application, the cylindrical shape of the housing 1 is not limited to a perfectly regular cylindrical shape of the housing 1, and the housing 1 may alternatively be in an irregular cylindrical shape. For example, the housing 1 may be locally provided with a protrusion or recess, making the housing 1 substantially cylindrical.

The electrode assembly 2 may be a wound structure, the electrode assembly 2 may be formed by winding a positive electrode plate, a separator, and a negative electrode plate, and the electrode assembly 2 may be cylindrical.

The sidewall 13 is a portion of the housing 1 disposed around the electrode assembly 2, and at least a portion of the shell 11 of the housing 1 may be the sidewall 13. The sidewall 13 is also cylindrical, where a cross section of the sidewall 13 is annular, and the cross section is perpendicular to an axial direction X of the sidewall 13. In embodiments where the shell 11 is a hollow structure with an opening formed at one end, the portion of the shell 11 disposed around the electrode assembly 2 is the sidewall 13, and it should be understood that the sidewall 13 is only a portion of the shell 11; and in embodiments where the shell 11 is a hollow structure with openings formed at both two opposite ends, the sidewall 13 is the shell 11.

The first groove 132 is a pressure relief groove provided on the sidewall 13, and during pressure relief of the battery cell 10, the sidewall 13 can rupture along at least a portion of the first groove 132 to release the internal pressure of the battery cell 10. In other words, during pressure relief of the battery cell 10, the sidewall 13 may rupture along a portion of the first groove 132 or along the entirety of the first groove 132. The first groove 132 may be formed by various methods, such as stamping or milling. The first groove 132 may be provided on an outer surface of the sidewall 13 or on an inner surface of the sidewall 13. The first groove 132 may be a groove extending along a non-closed trajectory. For example, the first groove segment 1321 and the third groove segment 1323 are not in contact with each other, and the first groove 132 may alternatively be a groove extending along a closed trajectory. For example, the first groove segment 1321 is connected to the third groove segment 1323, making the first groove segment 1321, the second groove segment 1322, and the third groove segment 1323 form a closed structure connected end-to-end.

The initiation segment 1322a is a portion of the first groove 132 that ruptures preferentially, and during pressure relief of the battery cell 10, the sidewall 13 ruptures at a position of the initiation segment 1322a earlier than other regions of the first groove 132. In other words, during thermal runaway of the battery cell 10, as the internal pressure of the battery cell 10 gradually increases, the initiation segment 1322a is more likely to rupture than other regions of the first groove 132, and the sidewall 13 preferentially ruptures at the position of the initiation segment 1322a. The strength of a residual portion of the initiation segment 1322a may be less than the strength of a residual portion of other regions of the first groove 132, enabling the sidewall 13 to preferentially rupture at the position of the initiation segment 1322a.

The first groove segment 1321, the second groove segment 1322, and the third groove segment 1323 are three segments of the first groove 132, where the second groove segment 1322 is a middle segment of the first groove 132, and the second groove segment 1322 serves to connect the first groove segment 1321 and the third groove segment 1323. The initiation segment 1322a may be a portion of the second groove segment 1322 or the second groove segment 1322 may be the entire initiation segment 1322a. The first groove segment 1321 may extend along a linear trajectory, and in this case, the first groove segment 1321 is parallel to the axial direction X of the sidewall 13. The first groove segment 1321 may alternatively extend along an arc trajectory in a plane, for example, the first groove segment 1321 extends along a circumferential direction Y of the sidewall 13; or the first groove segment 1321 may extend along a spatial curve trajectory. The second groove segment 1322 may extend along a linear trajectory, and in this case, the second groove segment 1322 is parallel to the axial direction X of the sidewall 13. The second groove segment 1322 may alternatively extend along an arc trajectory in a plane, for example, the second groove segment 1322 extends along the circumferential direction Y of the sidewall 13; or the second groove segment 1322 may extend along a spatial curve trajectory. The third groove segment 1323 may extend along a linear trajectory, and in this case, the third groove segment 1323 is parallel to the axial direction X of the sidewall 13. The third groove segment 1323 may alternatively extend along an arc trajectory in a plane, for example, the third groove segment 1323 extends along the circumferential direction Y of the sidewall 13; or the third groove segment 1323 may extend along a spatial curve trajectory. The extension directions of the first groove segment 1321, the second groove segment 1322, and the third groove segment 1323 may be the same, for example, the first groove segment 1321, the second groove segment 1322, and the third groove segment 1323 may be collinear and all extend along the axial direction X of the sidewall 13, so that the first groove 132 is a linear groove, where residual thicknesses and/or groove depths of the first groove segment 1321 and the third groove segment 1323 are both different from that of the second groove segment 1322 to distinguish them. The extension directions of the first groove segment 1321, the second groove segment 1322, and the third groove segment 1323 may alternatively be different, for example, the first groove segment 1321, the second groove segment 1322, and the third groove segment 1323 may form a U-shaped or H-shaped structure, so that the first groove 132 is a U-shaped groove, an H-shaped groove, or the like.

In these embodiments of this application, the sidewall 13 of the housing 1 is provided with a first groove 132, enabling the sidewall 13 to rupture along at least a portion of the first groove 132 during pressure relief of the battery cell 10, thereby releasing the internal pressure of the battery cell 10. The first groove 132 includes a first groove segment 1321, a second groove segment 1322, and a third groove segment 1323, where the second groove segment 1322 connects the first groove segment 1321 and the third groove segment 1323, and at least a portion of the second groove segment 1322 forms the initiation segment 1322a of the first groove 132. During thermal runaway of the battery cell 10, the sidewall 13 preferentially ruptures at the position of the initiation segment 1322a of the second groove segment 1322, allowing the second groove segment 1322 located in the middle to rupture earlier than the first groove segment 1321 and the third groove segment 1323. The resulting crack can expand along the first groove segment 1321 and the third groove segment 1323, so that the sidewall 13 can quickly rupture along the first groove segment 1321 and the third groove segment 1323 after rupturing at the position of the initiation segment 1322a, shortening the time required for the sidewall 13 to rupture along the first groove 132, enabling timely pressure relief, and reducing the risk of fire or explosion during thermal runaway of the battery cell 10, thereby effectively improving the reliability of the battery cell 10.

In some embodiments, the first groove segment 1321, the second groove segment 1322, and the third groove segment 1323 are sequentially connected to form a continuously disposed first groove 132, and on an extension path of the first groove 132, a midpoint of the first groove 132 is located in the initiation segment 1322a.

The first groove segment 1321, the second groove segment 1322, and the third groove segment 1323 are sequentially connected, meaning that one end of the first groove segment 1321 is connected to one end of the second groove segment 1322, and the other end of the second groove segment 1322 is connected to one end of the third groove segment 1323. The first groove segment 1321, the second groove segment 1322, and the third groove segment 1323 may form a U-shaped structure, a Z-shaped structure, or the like. On the extension path of the first groove 132, a distance from the midpoint of the first groove 132 to an end of the first groove segment 1321 away from the second groove segment 1322 and a distance from the midpoint of the first groove 132 to an end of the third groove segment 1323 away from the second groove segment 1322 are equal, both being half a groove length of the first groove 132. On an extension path of the first groove segment 1321, a groove length of the first groove segment 1321 is a first groove length; on an extension path of the second groove segment 1322, a groove length of the second groove segment 1322 is a second groove length; and on an extension path of the third groove segment 1323, a groove length of the third groove segment 1323 is a third groove length. On the extension path of the first groove 132, the groove length of the first groove 132 is a sum of the first groove length, the second groove length, and the third groove length.

In an example, on the extension path of the first groove 132, the midpoint of the first groove 132 is located between two ends of the initiation segment 1322a.

In these embodiments, the midpoint of the first groove 132 is located in the initiation segment 1322a, so that the initiation segment 1322a is located in a middle region of the first groove 132, reducing a path difference for the sidewall 13 to continue rupturing toward two ends of the first groove 132 after the sidewall 13 ruptures at the position of the initiation segment 1322a, facilitating synchronous rupturing of the sidewall 13 along the first groove segment 1321 and the third groove segment 1323, further shortening the time required for the sidewall 13 to rupture along the first groove 132, and improving the timeliness of pressure relief of the battery cell 10.

In some embodiments, on the extension path of the second groove segment 1322, the midpoint of the second groove segment 1322 is located in the initiation segment 1322a.

In these embodiments, the first groove segment 1321, the second groove segment 1322, and the third groove segment 1323 may be sequentially connected, for example, the first groove segment 1321, the second groove segment 1322, and the third groove segment 1323 form a U-shaped structure. Alternatively, a connection position of the first groove segment 1321 and the second groove segment 1322 may be deviated from two ends of the first groove segment 1321, and a connection position of the third groove segment 1323 and the second groove segment 1322 may be deviated from two ends of the third groove segment 1323, for example, the first groove segment 1321, the second groove segment 1322, and the third groove segment 1323 form an H-shaped structure.

In the embodiments where the first groove segment 1321, the second groove segment 1322, and the third groove segment 1323 are sequentially connected, the midpoint of the second groove segment 1322 may coincide with the midpoint of the first groove 132, or they may not coincide. It should be understood that, on the extension path of the first groove 132, if the groove length of the first groove segment 1321 is equal to the groove length of the third groove segment 1323, the midpoint of the second groove segment 1322 coincides with the midpoint of the first groove 132; and on the extension path of the first groove 132, if the groove length of the first groove segment 1321 is not equal to the groove length of the third groove segment 1323, the midpoint of the second groove segment 1322 does not coincide with the midpoint of the first groove 132.

In an example, in the embodiments shown in FIG. 6, the first groove segment 1321, the second groove segment 1322, and the third groove segment 1323 are sequentially connected, and on the extension path of the first groove 132, the groove length of the first groove segment 1321 is equal to the groove length of the third groove segment 1323, and the midpoint of the second groove segment 1322 is located between the two ends of the initiation segment 1322a.

In these embodiments, the midpoint of the second groove segment 1322 is located in the initiation segment 1322a, reducing the path difference for the sidewall 13 to continue rupturing toward the two ends of the second groove segment 1322 after the sidewall 13 ruptures at the position of the initiation segment 1322a, so that the sidewall 13 can quickly rupture along the second groove segment 1322 during thermal runaway of the battery cell 10, and thus the sidewall 13 can quickly rupture along the first groove segment 1321 and the third groove segment 1323, thereby effectively shortening the time required for the sidewall 13 to rupture along the first groove 132.

In some embodiments, the first groove 132 is a groove extending along a non-closed trajectory.

In an example, the first groove segment 1321 is not in contact with the third groove segment 1323, so that the first groove 132 is a groove extending along a non-closed trajectory.

In these embodiments, the first groove 132 is a groove extending along a non-closed trajectory, and the first groove 132 with such structure provides the sidewall 13 with better fatigue resistance, reducing the risk of the sidewall 13 prematurely rupturing along the first groove 132 during long-term cyclic use of the battery cell 10. Additionally, after the sidewall 13 ruptures along the first groove, the opened portion of the sidewall 13 is less likely to cause splashing.

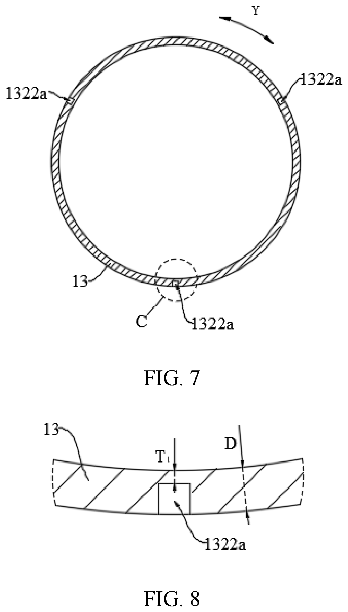

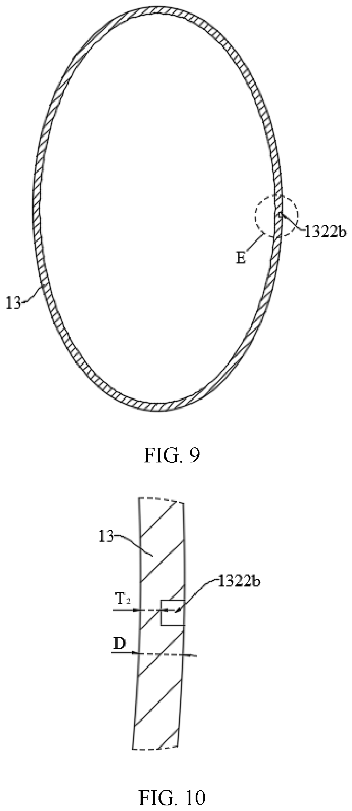

In some embodiments, referring to FIG. 7 to FIG. 10, FIG. 7 is a cross-sectional view along A-A of the housing 1 shown in FIG. 6; FIG. 8 is a partial enlarged view at C in FIG. 7; FIG. 9 is a cross-sectional view along B-B of the housing 1 shown in FIG. 6; and FIG. 10 is a partial enlarged view at E in FIG. 9. A minimum residual thickness of the initiation segment 1322a is less than a minimum residual thickness of other regions of the first groove 132.

The minimum residual thickness of the initiation segment 1322a is a minimum thickness of a residual portion of the initiation segment 1322a, the minimum thickness of the residual portion of the initiation segment 1322a can be measured at the thinnest position of the residual portion of the initiation segment 1322a, and the residual portion of the initiation segment 1322a may form a groove bottom wall of the initiation segment 1322a. The minimum residual thickness of other regions of the first groove 132 is a minimum thickness of a residual portion of other regions of the first groove 132, the minimum thickness of the residual portion of other regions of the first groove 132 can be measured at the thinnest position of the residual portion of other regions of the first groove 132, and the residual portion of other regions of the first groove 132 may form a groove bottom wall of other regions of the first groove 132. A thickness of the residual portion of the initiation segment 1322a may be uniform or non-uniform, and the thickness of the residual portion of other regions of the first groove 132 may be uniform or non-uniform.

In an example, a maximum residual thickness of the initiation segment 1322a is also less than the minimum residual thickness of other regions of the first groove 132, making a maximum thickness of the residual portion of the initiation segment 1322a less than the minimum thickness of the residual portion of other regions of the first groove 132, so that the residual thickness of the initiation segment 1322a is less than the residual thickness of other regions of the first groove 132.

Other regions of the first groove 132 are the remaining portions of the first groove 132 excluding the initiation segment 1322a. Other regions of the first groove 132 include the first groove segment 1321 and the third groove segment 1323. In the embodiments where the initiation segment 1322a is the entire second groove segment 1322, the first groove segment 1321 and the third groove segment 1323 constitute other regions of the first groove 132, and a smaller one of the minimum residual thickness of the first groove segment 1321 and the minimum residual thickness of the third groove segment 1323 is the minimum residual thickness of other regions of the first groove 132. In the embodiments where the initiation segment 1322a is only a portion of the second groove segment 1322, another portion of the second groove segment 1322, the first groove segment 1321, and the third groove segment 1323 may constitute other regions of the first groove 132, and the smallest one of a minimum residual thickness of the another portion of the second groove segment 1322, the minimum residual thickness of the first groove segment 1321, and the minimum residual thickness of the third groove segment 1323 is the minimum residual thickness of other regions of the first groove 132.

In an example, in the embodiments shown in FIG. 7 to FIG. 10, the minimum residual thickness of the first groove segment 1321 and the minimum residual thickness of the third groove segment 1323 are equal, and both the minimum residual thickness of the first groove segment 1321 and the minimum residual thickness of the third groove segment 1323 can be used as the minimum residual thickness of other regions of the first groove 132. The minimum residual thickness of the initiation segment 1322a is T₁, the minimum residual thickness of the other regions of the first groove 132 is T₂, and T₁<T₂. A maximum groove depth of the initiation segment 1322a is greater than a maximum groove depth of other regions of the first groove 132, and a sum of the maximum groove depth of the initiation segment 1322a and the minimum residual thickness of the initiation segment 1322a as well as a sum of the maximum groove depth of other regions of the first groove 132 and the minimum residual thickness of other regions of the first groove 132 are both equal to a wall thickness of the sidewall 13.

In these embodiments, the minimum residual thickness of the initiation segment 1322a is less than the minimum residual thickness of other regions of the first groove 132. This allows the strength of the residual portion of the initiation segment 1322a to be less than the strength of the residual portion of the other regions of the first groove 132, enabling the sidewall 13 to preferentially rupture at the initiation segment 1322a during thermal runaway of the battery cell 10, thereby achieving precise control of a rupture initiation position of the sidewall 13 and improving the accuracy of a rupture initiation position. The rupture initiation position of the sidewall 13 is a position where the sidewall 13 first ruptures during pressure relief of the battery cell 10.

In other embodiments, other methods may be used to achieve preferential rupturing of the sidewall 13 at the initiation segment 1322a during thermal runaway of the battery cell 10. For example, the minimum residual thickness of the initiation segment 1322a may be equal to the minimum residual thickness of other regions of the first groove 132, and at least a portion of a residual portion of the second groove segment 1322 may be heat-treated to reduce the strength of this portion, so as to correspondingly form the initiation segment 1322a, making the strength of the residual portion of the initiation segment 1322a less than the strength of the residual portion of other regions of the first groove 132.

In some embodiments, still referring to FIG. 6, the first groove segment 1321, the second groove segment 1322, and the third groove segment 1323 are sequentially connected to form a continuously disposed first groove 132, where the first groove segment 1321 is disposed opposite the third groove segment 1323.

The first groove segment 1321 and the third groove segment 1323 may be arranged parallel to each other, and the first groove segment 1321 and the third groove segment 1323 may alternatively be arranged at a non-zero angle. For example, an included angle between the first groove segment 1321 and the third groove segment 1323 may be less than or equal to 10°. The first groove segment 1321 and the third groove segment 1323 may extend along an arc trajectory, where the center of the arc trajectory is located on a centerline O of the sidewall 13, and a plane containing the arc trajectory is perpendicular to the centerline O of the sidewall 13. The first groove segment 1321 and the third groove segment 1323 may alternatively extend along an elliptical trajectory, where a plane containing the elliptical trajectory is not perpendicular to the centerline O of the sidewall 13, and an included angle between the plane containing the elliptical trajectory and the centerline O of the sidewall 13 may be greater than 0° and less than 90°.

The first groove segment 1321, the second groove segment 1322, and the third groove segment 1323 may define a predetermined pressure relief zone 134, and the predetermined pressure relief zone 134 can flip outward to be opened after the sidewall 13 ruptures along at least a portion of the first groove 132. It should be understood that the first groove segment 1321, the second groove segment 1322, and the third groove segment 1323 are located at an edge of the predetermined pressure relief zone 134.

In these embodiments, the first groove segment 1321, the second groove segment 1322, and the third groove segment 1323 are sequentially connected, where the first groove segment 1321 is disposed opposite the third groove segment 1323, so that the first groove 132 is a U-shaped groove, achieving simple structure. Additionally, the first groove segment 1321, the second groove segment 1322, and the third groove segment 1323 can define a predetermined pressure relief zone 134, and the predetermined pressure relief zone 134 can be quickly opened outward in a flipping manner during pressure relief of the battery cell 10, increasing a pressure relief area of the battery cell 10 and effectively increasing the pressure relief rate of the battery cell 10.

In some embodiments, the first groove segment 1321 and the third groove segment 1323 are both smoothly connected to the second groove segment 1322.

In an example, the second groove segment 1322 extends along a spatial curve trajectory, and when the sidewall 13 is unfolded into a flat structure, the second groove segment 1322 is an arc-shaped groove. The first groove segment 1321 and the third groove segment 1323 are both tangent to the second groove segment 1322 to achieve smooth connection between the first groove segment 1321 and the second groove segment 1322 as well as between the third groove segment 1323 and the second groove segment 1322.

In these embodiments, the first groove segment 1321 and the third groove segment 1323 are both smoothly connected to the second groove segment 1322, ensuring that no sharp corners are formed at a connection position between the first groove segment 1321 and the second groove segment 1322 and a connection position between the third groove segment 1323 and the second groove segment 1322. On one hand, this allows the sidewall 13 to smoothly rupture along the first groove segment 1321 and the third groove segment 1323 after the sidewall 13 ruptures along the second groove segment 1322, shortening the time required for the sidewall 13 to rupture along the first groove 132, and enabling the predetermined pressure relief zone 134 to flip toward the outside of the housing 1 more smoothly; on the other hand, stress concentration coefficients at the connection position between the first groove segment 1321 and the second groove segment 1322 and the connection position between the third groove segment 1323 and the second groove segment 1322 can be effectively reduced, enhancing the fatigue strength of the sidewall 13 and effectively extending the service life of the battery cell 10.

In some embodiments, still referring to FIG. 6 to FIG. 10, the second groove segment 1322 includes a first connecting segment 1322b, a second connecting segment 1322c, and the initiation segment 1322a. The first connecting segment 1322b connects the initiation segment 1322a and the first groove segment 1321, and the second connecting segment 1322c connects the initiation segment 1322a and the third groove segment 1323. The minimum residual thickness of the first connecting segment 1322b, the minimum residual thickness of the second connecting segment 1322c, the minimum residual thickness of the first groove segment 1321, and the minimum residual thickness of the third groove segment 1323 are all greater than the minimum residual thickness of the initiation segment 1322a.

The first connecting segment 1322b, the second connecting segment 1322c, and the initiation segment 1322a are three segments of the second groove segment 1322, where the first connecting segment 1322b, the initiation segment 1322a, and the second connecting segment 1322c sequentially connected. The first connecting segment 1322b is a portion of the second groove segment 1322 that is connected between the initiation segment 1322a and the first groove segment 1321, and the second connecting segment 1322c is a portion of the second groove segment 1322 that is connected between the initiation segment 1322a and the third groove segment 1323. The minimum residual thickness of the first connecting segment 1322b is a minimum thickness of a residual portion of the first connecting segment 1322b, and the residual portion of the first connecting segment 1322b may be a groove bottom wall of the first connecting segment 1322b.The minimum residual thickness of the second connecting segment 1322c is a minimum thickness of a residual portion of the second connecting segment 1322c, and the residual portion of the second connecting segment 1322c may be a groove bottom wall of the second connecting segment 1322c. The minimum residual thickness of the first groove segment 1321 is a minimum thickness of a residual portion of the first groove segment 1321, and the residual portion of the first groove segment 1321 may be a groove bottom wall of the first groove segment 1321. The minimum residual thickness of the third groove segment 1323 is a minimum thickness of a residual portion of the third groove segment 1323, and the residual portion of the third groove segment 1323 may be a groove bottom wall of the third groove segment 1323. The minimum residual thickness of the first connecting segment 1322b, the minimum residual thickness of the second connecting segment 1322c, the minimum residual thickness of the first groove segment 1321, and the minimum residual thickness of the third groove segment 1323 may be equal, or at least two of them may not be equal.

On the extension path of the second groove segment 1322, a groove length of the first connecting segment 1322b and a groove length of the second connecting segment 1322c may be equal or not equal. In an example, in the embodiments shown in FIG. 6, the groove length of the first connecting segment 1322b is equal to the groove length of the second connecting segment 1322c, making the initiation segment 1322a centrally positioned in the second groove segment 1322.

In these embodiments, the minimum residual thickness of the first connecting segment 1322b, the minimum residual thickness of the second connecting segment 1322c, the minimum residual thickness of the first groove segment 1321, and the minimum residual thickness of the third groove segment 1323 are all greater than the minimum residual thickness of the initiation segment 1322a, so that the strength of the residual portion of the initiation segment 1322a is less than the strength of the residual portion of the first connecting segment 1322b, the strength of the residual portion of the second connecting segment 1322c, the strength of the residual portion of the first groove segment 1321, and the strength of the residual portion of the third groove segment 1323, enabling the sidewall 13 to preferentially rupture at the initiation segment 1322a during thermal runaway of the battery cell 10. The second groove segment 1322 includes the first connecting segment 1322b, the second connecting segment 1322c, and the initiation segment 1322a, the initiation segment 1322a is connected to the first groove segment 1321 through the first connecting segment 1322b, the initiation segment 1322a is connected to the third groove segment 1323 through the second connecting segment 1322c, and the initiation segment 1322a is the middle segment of the second groove segment 1322, so that the sidewall 13 can quickly rupture along the first connecting segment 1322b and the second connecting segment 1322c located at the two ends of the initiation segment 1322a after the sidewall 13 ruptures at the position of the initiation segment 1322a, shortening the time required for the sidewall 13 to rupture along the second groove segment 1322, thereby enabling the sidewall 13 to quickly rupture along the first groove segment 1321 and the third groove segment 1323. With a fixed groove length of the second groove segment 1322, the provision of the first connecting segment 1322b and the second connecting segment 1322c can reduce the length of the initiation segment 1322a, enabling the sidewall 13 to preferentially rupture from the initiation segment 1322a during thermal runaway of the battery cell 10 and making the rupture initiation position of the sidewall 13 more accurate.

In some embodiments, the minimum residual thickness of the first connecting segment 1322b is equal to the minimum residual thickness of the first groove segment 1321; and/or the minimum residual thickness of the second connecting segment 1322c is equal to the minimum residual thickness of the third groove segment 1323; and/or the minimum residual thickness of the first connecting segment 1322b is equal to the minimum residual thickness of the second connecting segment 1322c; and/or the minimum residual thickness of the first groove segment 1321 is equal to the minimum residual thickness of the third groove segment 1323.

In an example, the minimum residual thickness of the first connecting segment 1322b, the minimum residual thickness of the first groove segment 1321, the minimum residual thickness of the second connecting segment 1322c, and the minimum residual thickness of the third groove segment 1323 are equal. Maximum groove depths of the first connecting segment 1322b, the first groove segment 1321, the second connecting segment 1322c, and the third groove segment 1323 are all equal. A sum of the minimum residual thickness of the first connecting segment 1322b and the maximum groove depth of the first connecting segment 1322b, a sum of the minimum residual thickness of the first groove segment 1321 and the maximum groove depth of the first groove segment 1321, a sum of the minimum residual thickness of the second connecting segment 1322c and the maximum groove depth of the second connecting segment 1322c, and a sum of the minimum residual thickness of the third groove segment 1323 and the maximum groove depth of the third groove segment 1323 are all equal to the wall thickness of the sidewall 13.

During formation of the first groove 132, the first groove segment 1321, the second groove segment 1322, and the third groove segment 1323 can be processed in one step according to the groove depth of the first groove segment 1321, and then the second groove segment 1322 is processed again to make a portion of the second groove segment 1322 deeper, so that the second groove segment 1322 is divided into the first connecting segment 1322b, the initiation segment 1322a, and the second connecting segment 1322c, and ultimately the minimum residual thickness of the first connecting segment 1322b, the minimum residual thickness of the first groove segment 1321, the minimum residual thickness of the second connecting segment 1322c, and the minimum residual thickness of the third groove segment 1323 are equal and all greater than the minimum residual thickness of the initiation segment 1322a. Thus, the forming difficulty of the first groove 132 can be effectively reduced, and the forming efficiency of the first groove 132 is improved.

In some embodiments, still referring to FIG. 8, the minimum residual thickness of the initiation segment 1322a is T₁, the wall thickness of the sidewall 13 is D, and 0.04≤T₁/D≤0.9.

T₁/D may take any value of or a value within a range between any two of 0.04, 0.05, 0.08, 0.1, 0.15, 0.2, 0.25, 0.3, 0.35, 0.4, 0.45, 0.5, 0.55, 0.6, 0.65, 0.7, 0.75, 0.8, 0.85, and 0.9.

The minimum residual thickness of the initiation segment 1322a may be measured at the thinnest position of the residual portion of the initiation segment 1322a. The wall thickness of the sidewall 13 is equal to a minimum distance between the outer surface and the outer surface of the sidewall 13.

In these embodiments, when T₁/D≥0.04, a proportion of the minimum residual thickness of the initiation segment 1322a in the wall thickness of the sidewall 13 is not too small, providing sufficient strength to the residual portion of the initiation segment 1322a, reducing the risk of the sidewall 13 prematurely rupturing along the initiation segment 1322a during long-term cyclic use of the battery cell 10, and extending the service life of the battery cell 10; and when T₁/D≤0.9, a proportion of the minimum residual thickness of the initiation segment 1322a in the wall thickness of the sidewall 13 is not too large, so that the sidewall 13 can rupture more timely at the initiation segment 1322a during thermal runaway of the battery cell 10, shortening the time required for the sidewall 13 to rupture along the first groove 132, thereby reducing the risk of fire or explosion in the battery cell 10.

In some embodiments, 0.1≤T₁/D≤0.5.

In these embodiments, T₁/D may take any value of or a value within a range between any two of 0.1, 0.12, 0.15, 0.18, 0.2, 0.22, 0.25, 0.28, 0.3, 0.32, 0.35, 0.38, 0.4, 0.42, 0.45, and 0.5.

In these embodiments, when T₁/D≥0.1, the proportion of the minimum residual thickness of the initiation segment 1322a in the wall thickness of the sidewall 13 is further increased, further reducing the risk of the sidewall 13 prematurely rupturing along the initiation segment 1322a during long-term cyclic use of the battery cell 10; and when T₁/D≤0.5, the proportion of the minimum residual thickness of the initiation segment 1322a in the wall thickness of the sidewall 13 is further reduced, further reducing the risk of fire or explosion in the battery cell 10.

In some embodiments, still referring to FIG. 6, on the extension path of the second groove segment 1322, the groove length of the initiation segment 1322a is L, and 0.2 mm≤L≤10 mm.

In these embodiments, L may take any value of or a value within a range between any two of 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, and 10 mm.

When L≥0.2 mm, the groove length of the initiation segment 1322a is not too small, reducing the processing difficulty of the initiation segment 1322a; and when L≤10 mm, the groove length of the initiation segment 1322a is not too large, enabling precise control of the rupture initiation position of the sidewall 13 and improving the accuracy of the rupture initiation position.

In some embodiments, 1 mm≤L≤6 mm.

In these embodiments, L may take any value of or a value within a range between any two of 1 mm, 1.2 mm, 1.5 mm, 1.8 mm, 2 mm, 2.2 mm, 2.5 mm, 2.8 mm, 3 mm, 3.2 mm, 3.5 mm, 3.8 mm, 4 mm, 4.2 mm, 4.5 mm, 4.8 mm, 5 mm, 5.2 mm, 5.5 mm, 5.8 mm, and 6 mm.

When L≥1 mm, the groove length of the initiation segment 1322a is further increased, further reducing the processing difficulty of the initiation segment 1322a; and when L≤6 mm, the groove length of the initiation segment 1322a is further reduced, further improving the accuracy of the rupture initiation position of the sidewall 13.

In some embodiments, still referring to FIG. 6, an extension trajectory line of the first groove segment 1321 is located in a first plane U, and an included angle between the centerline O of the sidewall 13 and the first plane U is α₁, where 30°≤α₁≤90°.

α₁ may take any value of or a value within a range between any two of 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, and 90°.

It should be understood that if α₁=90°, the first groove segment 1321 extends along the circumferential direction Y of the sidewall 13, and the extension trajectory line of the first groove segment 1321 is arc-shaped; if 30°≤α₁<90°, the extension trajectory line of the first groove segment 1321 is elliptical.

In these embodiments, 30°≤α₁≤90°, so that the included angle between the centerline O of the sidewall 13 and the first plane U is controlled to be within an appropriate range, reducing the risk of the sidewall 13 continuing to rupture along an extension line of the first groove segment 1321 and tearing the sidewall 13 after rupturing along the first groove segment 1321.

In some embodiments, still referring to FIG. 6, an extension trajectory line of the third groove segment 1323 is located in a second plane V, and an included angle between the centerline O of the sidewall 13 and the second plane V is α₂, where 30°≤α₂≤90°.

α₂ may take any value of or a value within a range between any two of 30°, 32°, 35°, 38°, 40°, 42°, 45°, 48°, 50°, 52°, 55°, 58°, 60°, 62°, 65°, 68°, 70°, 72°, 75°, 78°, 80°, 82°, 85°, 88°, and 90°.

It is possible that α₂=α₁, or α₂<α₁, or α₂>α₁.

In an example, in the embodiments shown in FIG. 6, the third groove segment 1323 is parallel to the first groove segment 1321, the second plane V is parallel to the first plane U, and α₂=α₁=90°.

Optionally, 40°≤α₁≤75°, and 40°≤α₂≤75°. This allows the predetermined pressure relief zone 134 defined by the first groove segment 1321, the second groove segment 1322, and the third groove segment 1323 to be in an inclined state, reducing the space crossed by the predetermined pressure relief zone 134 while the predetermined pressure relief zone 134 is flipped outward, and reducing the risk of decrease in a flipping angle of the predetermined pressure relief zone 134 caused when the predetermined pressure relief zone 134 is blocked by other battery cells 10.

In these embodiments, when 30°≤α₂≤90°, the included angle between the centerline O of the sidewall 13 and the second plane V is controlled to be within an appropriate range, reducing the risk of the sidewall 13 continuing to rupture along the extension line of the third groove segment 1323 and tearing the sidewall 13 after rupturing along the third groove segment 1323.

In some embodiments, the first groove 132 is provided on the outer surface of the sidewall 13.

It should be understood that an opening of the first groove 132 is located on the outer surface of the sidewall 13, and the first groove 132 is recessed from the outer surface of the sidewall 13 toward the inner surface of the sidewall 13. The outer surface of the sidewall 13 and the inner surface of the sidewall 13 are cylindrical surfaces, where the outer surface of the sidewall 13 faces the exterior of the housing 1, the inner surface of the sidewall 13 faces the interior of the housing 1, and a radius of the outer surface of the sidewall 13 is greater than a radius of the inner surface of the sidewall 13.

In an example, the first groove 132 is stamped on the outer surface of the sidewall 13.

In these embodiments, the first groove 132 is provided on the outer surface of the sidewall 13, so that the first groove 132 can be processed from the exterior of the sidewall 13, reducing the processing difficulty of the first groove 132.

In some embodiments, the sidewall 13 is provided with at least one groove group 131, where the groove group 131 includes multiple first grooves 132 spaced apart along the circumferential direction Y of the sidewall 13.

The sidewall 13 may include one or more groove groups 131. The multiple first grooves 132 are spaced apart along the circumferential direction Y of the sidewall 13, so that there is a specific distance between two adjacent first grooves 132 in the groove group 131. The groove group 131 may include two, three, four, five, six, or more first grooves 132. In the groove group 131, the multiple first grooves 132 may be uniformly distributed along the circumferential direction Y of the sidewall 13, so that a minimum distance between two adjacent first grooves 132 along the circumferential direction Y of the sidewall 13 is the same. When there are N first grooves 132 in the groove group 131, one first groove 132 may be provided every 360°/N along the circumferential direction Y of the sidewall 13. The multiple first grooves 132 may alternatively be non-uniformly distributed along the circumferential direction Y of the sidewall 13.

In an example, in the embodiments shown in FIG. 5, the sidewall 13 is provided with two groove groups 131, the two groove groups 131 are spaced apart along the axial direction X of the sidewall 13, and the multiple first grooves 132 in each groove group 131 are uniformly distributed on the sidewall 13.

In these embodiments, the groove group 131 includes multiple first grooves 132 spaced apart along the circumferential direction Y of the sidewall 13, and such structure enables the housing 1 to relieve pressure from multiple positions along the circumferential direction Y of the sidewall 13, further increasing the pressure relief rate of the battery cell 10.

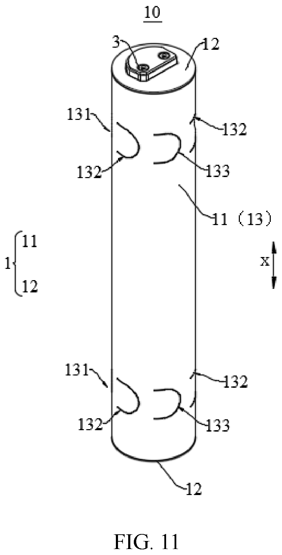

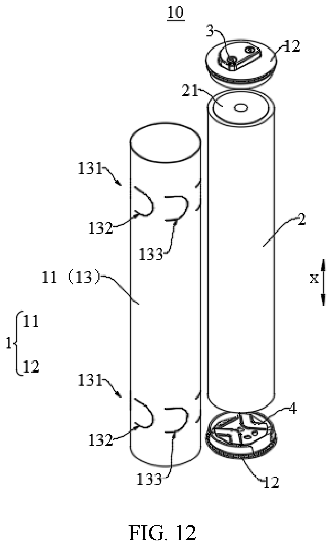

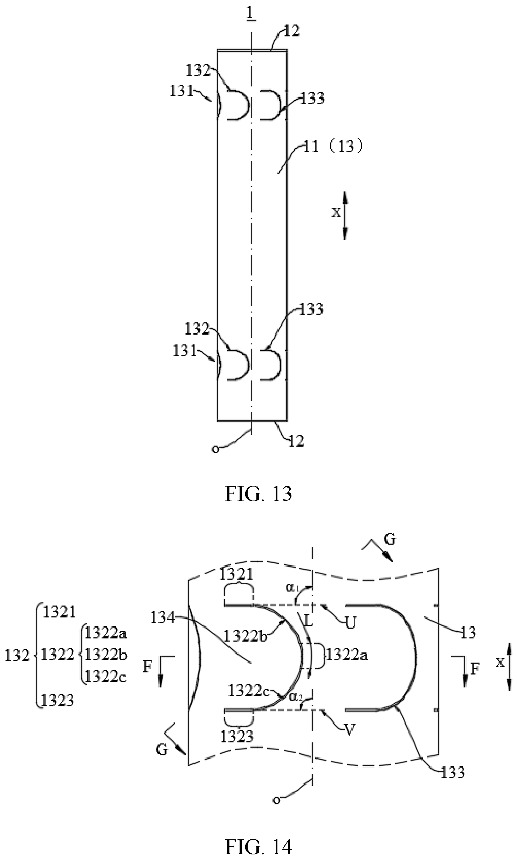

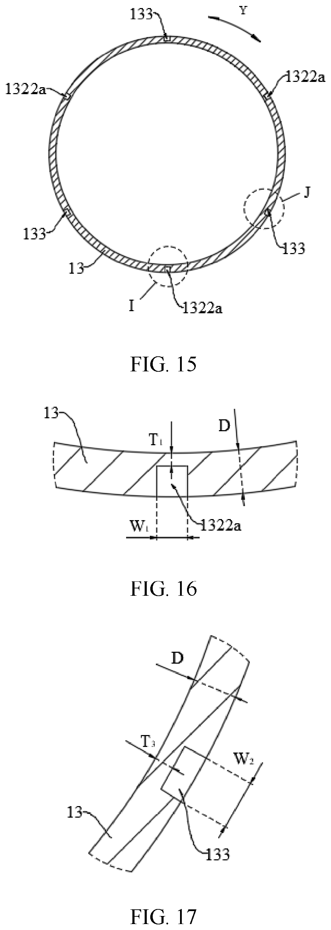

In some embodiments, referring to FIG. 11 to FIG. 15, FIG. 11 is an assembly diagram of a battery cell 10 according to some other embodiments of this application; FIG. 12 is an exploded view of the battery cell 10 shown in FIG. 11; FIG. 13 is a schematic structural diagram of a housing 1 shown in FIG. 12; FIG. 14 is a partial view of the housing 1 shown in FIG. 13; and FIG. 15 is a cross-sectional view along F-F of the housing 1 shown in FIG. 14. The sidewall 13 is provided with at least one groove group 131. The groove group 131 includes at least one first groove 132 and at least one second groove 133 spaced apart along the circumferential direction Y of the sidewall 13, where a minimum residual thickness of the second groove 133 is greater than a minimum residual thickness of the initiation segment 1322a.

The sidewall 13 may include one or more groove groups 131. The first groove 132 and the second groove 133 are both grooves in the groove group 131, where multiple grooves in the groove group 131 are spaced apart along the circumferential direction Y of the sidewall 13, so that there is a specific distance between two adjacent grooves along the circumferential direction Y of the sidewall 13. Some of the multiple grooves are the first grooves 132, and the others in the multiple grooves are the second grooves 133. The groove group 131 may include one or more first grooves 132, and the groove group 131 may include one or more second grooves 133. The multiple grooves in the groove group 131 may be uniformly distributed along the circumferential direction Y of the sidewall 13, meaning that all first grooves 132 and all second grooves 133 in the groove group 131 are uniformly distributed along the circumferential direction Y of the sidewall 13. The multiple grooves in the groove group 131 may alternatively be non-uniformly distributed along the circumferential direction Y of the sidewall 13. In the groove group 131, the number of the first grooves 132 may be equal to the number of the second grooves 133, or the number of the first grooves 132 may be greater than the number of the second grooves 133, or the number of the second grooves 133 may be greater than the number of the first grooves 132. A sum of the number of the first grooves 132 and the number of the first grooves 132 may be even or odd. In the groove group 131, along the circumferential direction Y of the sidewall, at least two first grooves 132 may be arranged adjacently, and at least two second grooves 133 may be arranged adjacently. In an example in which there are three first grooves 132 and three second grooves 132 in the groove group, the three first grooves 132 may be arranged adjacently, and the three second grooves 133 may be arranged adjacently. In the groove group, along the circumferential direction of the sidewall, one or more second grooves 133 may be disposed between two adjacent first grooves 132, or one or more first grooves 132 may be disposed between two adjacent second grooves 133.

In the groove group 131, the shape of the second groove 133 may be the same as the shape of the first groove 132. For example, the second groove 133 and the first groove 132 are both U-shaped structures. The shape of the second groove 133 may alternatively be different from the shape of the first groove 132. For example, one of the first groove 132 and the second groove 133 is a U-shaped structure, and the other may be an H-shaped structure. A volume of the second groove 133 and a volume of the first groove 132 may be equal or not equal. In an example, the volume of the first groove 132 is V₁, the volume of the second groove 133 is V₂, the volume of the larger one of the first groove 132 and the second groove 133 is V₃, and 0≤|V₁-V₂|/V₃≤0.3, so that the difference in material displacement during the formation of the first groove 132 and the second groove 133 is reduced, helping to increase the roundness of the sidewall 13, where |V₁-V₂|/V₃ may take any value of or a value within a range between any two of 0, 0.05, 0.1, 0.15, 0.2, 0.25, and 0.3.

The minimum residual thickness of the second groove 133 is the minimum thickness of the residual portion of the second groove 133, and the residual portion of the second groove 133 may be a groove bottom wall of the second groove 133.

The second groove 133 may be formed by various methods, such as stamping or milling. The second groove 133 and the first groove 132 may be disposed on a same surface of the sidewall 13. For example, the second groove 133 and the first groove 132 are both disposed on the outer surface of the sidewall 13. For another example, the second groove 133 and the first groove 132 are both disposed on the inner surface of the sidewall 13. The second groove 133 and the first groove 132 may alternatively be disposed on different surfaces of the sidewall 13, for example, one of the second groove 133 and the first groove 132 is disposed on the outer surface of the sidewall 13, and the other is disposed on the inner surface of the sidewall 13. In an example, in the embodiments shown in FIG. 15, the second groove 133 and the first groove 132 are both disposed on the outer surface of the sidewall 13 and are both stamped on the sidewall 13.

The first groove 132 is a true pressure relief groove, and the second groove 133 is a false pressure relief groove. During pressure relief, the sidewall 13 can rupture along the first groove 132 but is less likely to rupture along the second groove 133. After the first groove 132 is provided on the sidewall 13, the sidewall 13 releases residual stress at the position where the first groove 132 is provided, reducing the roundness of the sidewall 13. However, after the second groove 133 is provided on the sidewall 13, the sidewall 13 may also release stress at the position where the second groove 133 is provided, mitigating the deformation of the sidewall 13 caused by the stress release at the position of the first groove 132, effectively increasing the roundness of the sidewall 13, and improving the assembly quality of the battery cell 10, thereby extending the service life of the battery cell 10. In an example in which the end cover 12 is welded to the sidewall 13, after the roundness of the sidewall 13 is increased by providing the second groove 133, the welding quality between the end cover 12 and the sidewall 13 can be effectively improved.

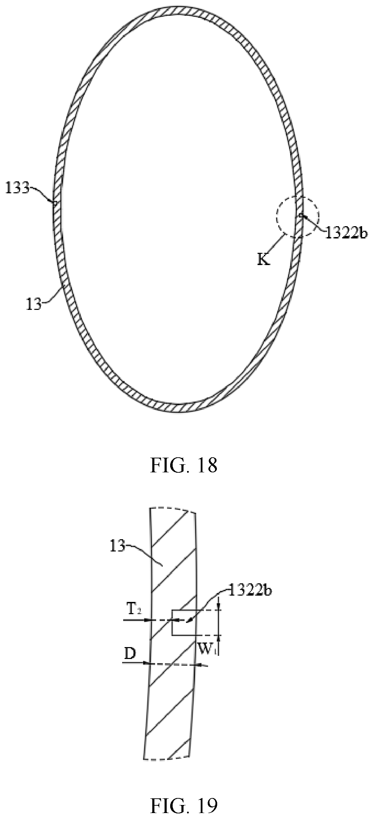

In some embodiments, referring to FIG. 16 to FIG. 19, FIG. 16 is a partial enlarged view at I in FIG. 15; FIG. 17 is a partial enlarged view at J in FIG. 15; FIG. 18 is a cross-sectional view along G-G of the housing 1 shown in FIG. 14; and FIG. 19 is a partial enlarged view at K in FIG. 18. The minimum residual thickness of the initiation segment 1322a is T₁, the minimum residual thickness of other regions of the first groove 132 is T₂, and the minimum residual thickness of the second groove 133 is T₃, where T₁<T₂ and T₁<T₃.

In these embodiments, it may be that T₂=T₃, or T₂<T₃, or T₂>T₃.

In the embodiments where the second groove segment 1322 includes the first connecting segment 1322b and the second connecting segment 1322c, the first connecting segment 1322b, the second connecting segment 1322c, the first groove segment 1321, and the third groove segment 1323 constitute other regions of the first groove 132, and the smallest one of the minimum residual thickness of the first connecting segment 1322b, the minimum residual thickness of the second connecting segment 1322c, the minimum residual thickness of the first groove segment 1321, and the minimum residual thickness of the third groove segment 1323 is the minimum residual thickness of other regions of the first groove 132. In the embodiments shown in FIG. 19, the minimum residual thickness of the first connecting segment 1322b is the minimum residual thickness of other regions of the first groove 132.

In these embodiments, T₁<T₂, and T₁<T₃, so that the strength of the residual portion of other regions of the first groove 132 and the strength of the residual portion of the second groove 133 are both greater than the strength of the residual portion of the initiation segment 1322a, enabling the sidewall 13 to preferentially rupture at the initiation segment 1322a during thermal runaway of the battery cell 10. Thus, the sidewall 13 can rupture along the first groove 132 but is less likely to rupture along the second groove 133.

In some embodiments, |T₃-T₂|≤0.1 mm.

|T₃-T₂| may take any value of or a value within a range between any two of 0 mm, 0.01 mm, 0.02 mm, 0.03 mm, 0.04 mm, 0.05 mm, 0.06 mm, 0.07 mm, 0.08 mm, 0.09 mm, and 0.1 mm.

In these embodiments, when |T₃-T₂|≤0.1 mm, the difference between the groove depth of the second groove 133 and the groove depth of other regions of the first groove 132 is not too large, helping to reduce the difference in material displacement of the first groove 132 and the second groove 133 during the processing of the first groove 132 and the second groove 133, minimizing the deformation of the sidewall 13, and helping to increase the roundness of the sidewall 13.

In some embodiments, the groove width of the first groove 132 is W₁, the groove width of the second groove 133 is W₂, and |W₂-W₁|≤0.1 mm.

|W₂-W₁| may take any value of or a value within a range between any two of 0 mm, 0.01 mm, 0.02 mm, 0.03 mm, 0.04 mm, 0.05 mm, 0.06 mm, 0.07 mm, 0.08 mm, 0.09 mm, and 0.1 mm.

It may be that W₂>W₁, or W₂<W₁, or W₂=W₁.

The groove width of the first groove 132 is a maximum width of the opening of the first groove 132 in a width direction of the first groove 132. In an example in which the first groove 132 is disposed on the outer surface of the sidewall 13, the opening of the first groove 132 is located on the outer surface of the sidewall 13, and the maximum width of the opening of the first groove 132 can be measured on the outer surface of the sidewall 13, and thus the groove width of the first groove 132 is measured. The groove width of the second groove 133 is a maximum width of the opening of the second groove 133 in a width direction of the second groove 133. In an example in which the second groove 133 is disposed on the outer surface of the sidewall 13, the opening of the second groove 133 is located on the outer surface of the sidewall 13, and the maximum width of the opening of the second groove 133 can be measured on the outer surface of the sidewall 13, and thus the groove width of the second groove 133 is measured.

In these embodiments, when |W₂-W₁|≤0.1 mm, the difference between the groove width of the second groove 133 and the groove width of the first groove 132 is not too large, helping to reduce the difference in material displacement of the first groove 132 and the second groove 133 during the processing of the first groove 132 and the second groove 133, minimizing the deformation of the sidewall 13, and helping to increase the roundness of the sidewall 13.

In some embodiments, the groove group 131 includes multiple first grooves 132 and multiple second grooves 133, and along the circumferential direction Y of the sidewall 13, the first grooves 132 and the second grooves 133 in the groove group 131 are alternately arranged.

The groove group 131 may include two, three, four, or more first grooves 132, and the groove group 131 may include two, three, four, or more second grooves 133, where the number of the first grooves 132 in the groove group 131 is equal to the number of the second grooves 133.

In an example, in the embodiments shown in FIG. 15, the groove group 131 includes three first grooves 132 and three second grooves 133, where a total of six grooves are provided in the groove group 131, the grooves in the groove group 131 are arranged in an order of first groove 132 - second groove 133 - first groove 132 - second groove 133 - first groove 132 - second groove 133 to achieve alternative arrangement of the first grooves 132 and the second grooves 133.

In these embodiments, the first grooves 132 and the second grooves 133 in the groove group 131 are alternately arranged, and each second groove 133 can mitigate the deformation of the sidewall 13 caused by the stress release of two adjacent first grooves 132 on two sides of this second groove 133, further increasing the roundness of the sidewall 13.

In some embodiments, still referring to FIG. 4 and FIG. 12, the sidewall 13 is provided with multiple groove groups 131, and the multiple groove groups 131 are spaced apart along the axial direction X of the sidewall 13.

The sidewall 13 may include two, three, four, or more groove groups 131. The multiple groove groups 131 are spaced apart along the axial direction X of the sidewall 13, meaning that there is a specific distance between two adjacent groove groups 131 along the axial direction X of the sidewall 13.

In an example, in the embodiments shown in FIG. 4 and FIG. 12, the sidewall 13 includes two groove groups 131. During thermal runaway of the battery cell 10, emissions located at two ends of the interior of the battery cell 10 can be discharged through the two groove groups 131, respectively, and emissions located in the middle of the interior of the battery cell 10 can be discharged through both groove groups 131 simultaneously.

In these embodiments, the sidewall 13 is provided with multiple groove groups 131, and the multiple groove groups 131 are spaced apart along the axial direction X of the sidewall 13. Such structure enables emissions inside the housing 1 to be discharged from the regions of the first grooves 132 in the multiple groove groups 131 during thermal runaway of the battery cell 10, further increasing the pressure relief rate of the battery cell 10. The emissions include, but are not limited to, electrolyte, fragments of dissolved or fragmented positive and negative electrode plates and separator, high-temperature and high-pressure gases generated by reactions, and flames.

In some embodiments, still referring to FIG. 4 and FIG. 12, along the axial direction X of the sidewall 13, the two opposite ends of the sidewall 13 are each provided with an opening. The housing 1 further includes two end covers 12, and the two end covers 12 respectively seal the openings at the two ends of the sidewall 13.

It should be understood that the sidewall 13 is a hollow structure with openings formed at both two opposite ends, and the sidewall 13 is the shell 11 of the housing 1.

The shell 11 may be formed by stretching a plate. The sidewall 13 and the end cover 12 may be connected by welding or crimping.

In these embodiments, the sidewall 13 is a hollow structure with openings formed at both two opposite ends, allowing the electrode assembly 2 to be assembled into the sidewall 13 through either opening, thereby reducing the assembly difficulty of the battery cell 10 and improving the assembly quality of the battery cell 10. The sidewall 13 with such structure has lower forming difficulty, allowing the length of the sidewall 13 (a dimension of the sidewall 13 in the axial direction X) to be made larger, thereby helping to increase the capacity of the battery cell 10.

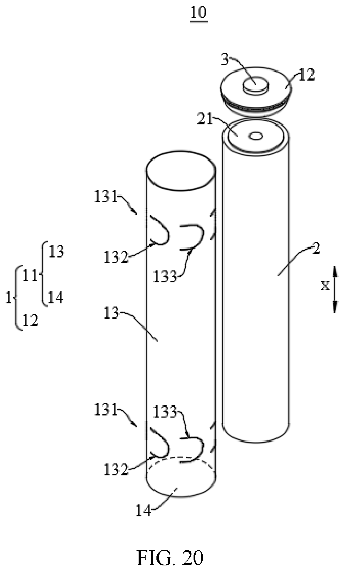

In some embodiments, referring to FIG. 20, FIG. 20 is an exploded view of a battery cell 10 according to some embodiments of this application. The housing 1 includes a shell 11 and an end cover 12, where the shell 11 includes a sidewall 13 and a bottom wall 14. Along the axial direction X of the sidewall 13, one end of the sidewall 13 is connected to a bottom wall 14, the other end of the sidewall 13 forms an opening, and the end cover 12 seals the opening.

It should be understood that the shell 11 is a hollow structure with an opening formed at one end, and the housing 1 includes one end cover 12, with one end cover 12 sealing one opening of the shell 11. The bottom wall 14 is a wall portion of the shell 11 facing the end cover 12, and the sidewall 13 and the bottom wall 14 may be integrally formed. For example, the shell 11 may be formed by stretching a plate to achieve integral formation of the sidewall 13 and the bottom wall 14. The sidewall 13 and the end cover 12 may be connected by welding or crimping.

In an example, in the embodiments shown in FIG. 20, along the axial direction X of the sidewall 13, two opposite ends of the electrode assembly 2 are each provided with a tab 21, where the tabs 21 at the two ends of the electrode assembly 2 are a positive tab and a negative tab, respectively. The end cover 12 is provided with an electrode terminal 3, the electrode terminal 3 is electrically connected to the positive tab, and the bottom wall 14 of the shell 11 is electrically connected to the negative tab.

In these embodiments, the shell 11 is a hollow structure with an opening formed at one end, and only one end cover 12 is required to cooperate with the shell 11, simplifying the structure of the battery cell 10.

In some embodiments, the material of the sidewall 13 includes steel.

The steel may be carbon steel, stainless steel, or the like.

In some embodiments, the material of the sidewall 13 includes aluminum alloy.

In some embodiments, the aluminum alloy includes the following components by mass percentage: aluminum≥99.6%, copper≤ 0.05%, iron≤ 0.35%, magnesium≤ 0.03%, manganese≤ 0.03%, silicon≤ 0.25%, titanium≤ 0.03%, vanadium≤ 0.05%, zinc≤ 0.05%, and other individual elements≤ 0.03%.

Such aluminum alloy has lower hardness and better formability, reducing the processing difficulty of the first groove 132, thereby helping to improve the processing accuracy of the first groove 132 and enhancing the pressure relief consistency of the sidewall 13.

In some embodiments, the aluminum alloy includes the following components by mass percentage: aluminum≥96.7%, 0.05%≤copper≤0.2%, iron≤0.7%, manganese≤1.5%, silicon≤0.6%, zinc≤0.1%, other individual element components≤0.05%, and all other element components≤0.15%.

The sidewall 13 made of such aluminum alloy has higher hardness and greater strength, with good resistance to damage.

An embodiment of this application provides a battery 100, including the battery cell 10 provided in any of the above embodiments.

An embodiment of this application provides an electric device, including the battery cell 10 provided in any of the above embodiments, where the battery cell 10 is configured to provide electrical energy to the electric device.

Referring to FIG. 3 to FIG. 10, an embodiment of this application provides a cylindrical battery cell, including a housing 1 and an electrode assembly 2, where the electrode assembly 2 is accommodated in the housing 1. The housing 1 is cylindrical, the housing 1 includes a shell 11 and two end covers 12, the shell 11 has openings formed at both two opposite ends, the shell 11 forms a sidewall 13 of the housing 1, the sidewall 13 surrounds an outer side of the electrode assembly 2, and the two end covers 12 respectively seal the two openings of the shell 11. Along an axial direction X of the sidewall 13, two ends of the electrode assembly 2 are each provided with a tab 21, where the tabs 21 are respectively a positive tab and a negative tab. The two end covers 12 are each provided with an electrode terminal 3, where the electrode terminal 3 on one end cover 12 is connected to the positive tab through one current collector 4, and the electrode terminal 3 on the other end cover 12 is connected to the negative tab through another current collector 4.

The sidewall 13 is provided with two groove groups 131, and the two groove groups 131 are spaced apart along the axial direction X of the sidewall 13. Each groove group 131 includes multiple first grooves 132, the multiple first grooves 132 are spaced apart along a circumferential direction Y of the sidewall 13, the first grooves 132 are provided on an outer surface of the sidewall 13, and the sidewall 13 is configured to be capable of rupturing along at least a portion of the first groove 132 during pressure relief of the battery cell 10. The first groove 132 includes an initiation segment 1322a that preferentially ruptures. The first groove 132 includes a first groove segment 1321, a second groove segment 1322, and a third groove segment 1323. The second groove segment 1322 connects the first groove segment 1321 and the third groove segment 1323. The first groove segment 1321, the second groove segment 1322, and the third groove segment 1323 are sequentially connected, and the first groove segment 1321 is disposed opposite the third groove segment 1323. The second groove segment 1322 includes a first connecting segment 1322b, an initiation segment 1322a, and a second connecting segment 1322c. The first connecting segment 1322b connects the initiation segment 1322a and the first groove segment 1321, and the second connecting segment 1322c connects the initiation segment 1322a and the third groove segment 1323. A minimum residual thickness of the first groove segment 1321, a minimum residual thickness of the first connecting segment 1322b, a minimum residual thickness of the second connecting segment 1322c, and a minimum residual thickness of the third groove segment 1323 are equal and all greater than a minimum residual thickness of the initiation segment 1322a. On an extension path of the first groove 132, a groove length of the first groove segment 1321 is equal to a groove length of the third groove segment 1323, and a groove length of the first connecting segment 1322b is equal to a groove length of the second connecting segment 1322c.

A residual thickness of the initiation segment 1322a is T₁, a wall thickness of the sidewall 13 is D, and 0.04≤T₁/D≤0.9. On an extension path of the second groove segment 1322, a groove length of the initiation segment 1322a is L, and 0.2 mm≤L≤10 mm. An extension trajectory line of the first groove segment 1321 is located in a first plane U, and an included angle between a centerline O of the sidewall 13 and the first plane U is α₁, where 30°≤α₁≤90°. An extension trajectory line of the third groove segment 1323 is located in a second plane V, and an included angle between the centerline O of the sidewall 13 and the second plane V is α₂, where 30°≤α₂≤90°. The second plane V is parallel to the first plane U.

During thermal runaway of the battery cell 10, the sidewall 13 preferentially ruptures at the position of the initiation segment 1322a of the second groove segment 1322, and the resulting crack can expand along the first groove segment 1321 and the third groove segment 1323, so that the sidewall 13 can quickly rupture along the first groove segment 1321 and the third groove segment 1323 after rupturing at the position of the initiation segment 1322a, shortening the time required for the sidewall 13 to rupture along the first groove 132, enabling timely pressure relief, and reducing the risk of fire or explosion during thermal runaway of the battery cell 10, thereby effectively improving the reliability of the battery cell 10. Controlling the included angle between the centerline O of the sidewall 13 and the first plane U to be within the range of 30° to 90° can reduce the risk of the sidewall 13 continuing to rupture along an extension line of the first groove segment 1321 and tearing the sidewall 13 after rupturing along the first groove segment 1321. Controlling the included angle between the centerline O of the sidewall 13 and the second plane V to be within the range of 30° to 90° can reduce the risk of the sidewall 13 continuing to rupture along an extension line of the third groove segment 1323 and tearing the sidewall 13 after rupturing along the third groove segment 1323.

It should be noted that, without conflict, the embodiments and the features in the embodiments of this application may be combined with each other.

The above embodiments are merely used to illustrate the technical solutions of this application and are not intended to limit this application. For those skilled in the art, various modifications and changes may be made to this application. Any modifications, equivalent substitutions, improvements, and the like made within the spirit and principles of this application shall be included within the scope of protection of this application.

## Claims

1. A battery cell, comprising:
an electrode assembly; and
a housing, wherein the housing is cylindrical, the housing accommodates the electrode assembly, the housing comprises a sidewall disposed around the electrode assembly, the sidewall is provided with a first groove, and the sidewall is configured to be capable of rupturing along at least a portion of the first groove during pressure relief of the battery cell;
wherein the first groove includes an initiation segment that preferentially ruptures, the first groove comprises a first groove segment, a second groove segment, and a third groove segment, the second groove segment connects the first groove segment and the third groove segment, and at least a portion of the second groove segment forms the initiation segment.

2. The battery cell according to claim 1, wherein the first groove segment, the second groove segment, and the third groove segment are sequentially connected to form a continuously disposed first groove, and on an extension path of the first groove, a midpoint of the first groove is located in the initiation segment.

3. The battery cell according to claim 1 or 2, wherein on an extension path of the second groove segment, a midpoint of the second groove segment is located in the initiation segment.

4. The battery cell according to any one of claims 1 to 3, wherein the first groove is a groove extending along a non-closed trajectory.

5. The battery cell according to any one of claims 1 to 4, wherein a minimum residual thickness of the initiation segment is less than a minimum residual thickness of other regions of the first groove.

6. The battery cell according to any one of claims 1 to 5, wherein the first groove segment, the second groove segment, and the third groove segment are sequentially connected to form a continuously disposed first groove, and the first groove segment is disposed opposite the third groove segment.

7. The battery cell according to claim 6, wherein the first groove segment and the third groove segment are both smoothly connected to the second groove segment.

8. The battery cell according to claim 6 or 7, wherein the second groove segment comprises a first connecting segment, a second connecting segment, and the initiation segment, the first connecting segment connects the initiation segment and the first groove segment, and the second connecting segment connects the initiation segment and the third groove segment;
wherein a minimum residual thickness of the first connecting segment, a minimum residual thickness of the second connecting segment, a minimum residual thickness of the first groove segment, and a minimum residual thickness of the third groove segment are all greater than a minimum residual thickness of the initiation segment.

9. The battery cell according to claim 8, wherein the minimum residual thickness of the first connecting segment is equal to the minimum residual thickness of the first groove segment; and/or
the minimum residual thickness of the second connecting segment is equal to the minimum residual thickness of the third groove segment; and/or
the minimum residual thickness of the first connecting segment is equal to the minimum residual thickness of the second connecting segment; and/or
the minimum residual thickness of the first groove segment is equal to the minimum residual thickness of the third groove segment.

10. The battery cell according to any one of claims 1 to 9, wherein a minimum residual thickness of the initiation segment is T₁, a wall thickness of the sidewall is D, and 0.04≤T₁/D≤0.9.

11. The battery cell according to claim 10, wherein 0.1≤T₁/D≤0.5.

12. The battery cell according to any one of claims 1 to 11, wherein on an extension path of the second groove segment, a groove length of the initiation segment is L, and 0.2 mm≤L≤10 mm.

13. The battery cell according to claim 12, wherein 1 mm≤L≤6 mm.

14. The battery cell according to any one of claims 1 to 13, wherein an extension trajectory line of the first groove segment is located in a first plane, and an included angle between a centerline of the sidewall and the first plane is α₁, wherein30°≤α₁≤90°.

15. The battery cell according to claim 14, wherein an extension trajectory line of the third groove segment is located in a second plane, and an included angle between the centerline of the sidewall and the second plane is α₂, wherein30°≤α₂≤90°.

16. The battery cell according to any one of claims 1 to 15, wherein the first groove is provided on an outer surface of the sidewall.

17. The battery cell according to any one of claims 1 to 16, wherein the sidewall is provided with at least one groove group, and the groove group comprises multiple first grooves spaced apart along a circumferential direction of the sidewall.

18. The battery cell according to any one of claims 1 to 16, wherein the sidewall is provided with at least one groove group, the groove group comprises at least one first groove and at least one second groove spaced apart along a circumferential direction of the sidewall, and a minimum residual thickness of the second groove is greater than a minimum residual thickness of the initiation segment.

19. The battery cell according to claim 18, wherein the minimum residual thickness of the initiation segment is T₁, a minimum residual thickness of the other regions of the first groove is T₂, and the minimum residual thickness of the second groove is T₃, wherein T₁<T₂ and T₁<T₃.

20. The battery cell according to claim 19, wherein |T₃-T₂|≤0.1 mm.

21. The battery cell according to any one of claims 18 to 20, wherein a groove width of the first groove is W₁, a groove width of the second groove is W₂, and |W₂-W₁|≤0.1 mm.

22. The battery cell according to any one of claims 18 to 21, wherein the groove group comprises multiple first grooves and multiple second grooves, and along the circumferential direction of the sidewall, the first grooves and the second grooves in the groove group are alternately arranged.

23. The battery cell according to any one of claims 17 to 22, wherein the sidewall is provided with multiple groove groups, and the multiple groove groups are spaced apart along an axial direction of the sidewall.

24. The battery cell according to any one of claims 1 to 23, wherein along an axial direction of the sidewall, two opposite ends of the sidewall are each provided with an opening; and
the housing further comprises two end covers, and the two end covers respectively seal the openings at the two ends of the sidewall.

25. The battery cell according to any one of claims 1 to 23, wherein the housing comprises:
a shell, comprising the sidewall and a bottom wall, wherein along an axial direction of the sidewall, one end of the sidewall is connected to the bottom wall, and the other end of the sidewall is provided with an opening; and
an end cover, sealing the opening.

26. A battery, comprising the battery cell according to any one of claims 1 to 25.

27. An electric device, comprising the battery cell according to any one of claims 1 to 25, wherein the battery cell is configured to provide electrical energy to the electric device.
